# EUROPÄISCHE PATENTSCHRIFT

(11) **EP 4 473 237 B1**
(45) Veröffentlichungstag und Bekanntmachung des Hinweises auf die Patenterteilung: **06.05.2026**
(21) Anmeldenummer: 23703161.2
(22) Anmeldetag: 01.02.2023
(51) Int. Cl.: F16L 37/14

(54) **STECKVERBINDER MIT MONTAGESICHERUNG**
PLUG CONNECTOR WITH MOUNTING PROTECTION
RACCORD ENFICHABLE À PROTECTION DE MONTAGE

(30) Priorität: 01.02.2022 DE 102022102278; 02.03.2022 DE 102022104970
(43) Veröffentlichungstag der Anmeldung: 11.12.2024
(73) Patentinhaber: Voss Automotive GmbH, 51688 Wipperfürth (DE)
(72) Erfinder: OBERDÖRFER, Alexander, 42477 Radevormwald (DE); HEINRICHS, Eugen, 51702 Bergneustadt (DE)
(74) Vertreter: Dr. Solf & Zapf Patent- und Rechtsanwalts PartG mbB
(86) Internationale Anmeldenummer: PCT/EP2023/052379
(87) Internationale Veröffentlichungsnummer: WO 2023/148189

(56) Entgegenhaltungen:
- EP-A1- 3 171 066
- WO-A1-2021/190897
- US-A1- 2017 067 588

## Beschreibung

Die Erfindung betrifft einen Steckverbinder zum Verbinden von einer ersten Fluidleitung mit einem Gegensteckverbinder. Der Steckverbinder weist einen Grundkörper mit einem Durchgangskanal auf. Der Durchgangskanal ist fluidisch mit einem als Muffenabschnitt ausgebildeten Ende des Grundkörpers verbunden, wobei in einem Aufnahmekanal des Muffenabschnitts ein Klammerkäfig angeordnet ist. Der Klammerkäfig ist in eine Montagerichtung in den Aufnahmekanal des Muffenabschnitts einsteckbar und formschlüssig axial zur Montagerichtung gehalten. Zwei parallel zueinander verlaufende Haltearme einer senkrecht zur Montagerichtung in den Klammerkäfig einsteckbaren Halteklammer ragen in einem Ruhezustand der Haltearme in eine Durchgangsöffnung des Klammerkäfigs hinein und sind radial zur Durchgangsöffnung elastisch in einen Spannungszustand aufweitbar ausgebildet. Die Halteklammer ist radial zur Durchgangsöffnung von einer Einführstellung in eine Blockierstellung und von der Blockierstellung in die Einführstellung verschiebbar ausgebildet. Die Haltearme sind in der Einführstellung der Halteklammer in ihren Spannungszustand aufweitbar. Zudem sind die Haltearme in der Blockierstellung der Halteklammer gegen eine Aufweitung in ihren Spannungszustand blockiert.

Aus der WO 2015/181396 A2 ist ein Steckverbinder zum Anschluss eines Gegensteckverbinders bekannt. Bei diesem Steckverbinder weist der Klammerkäfig sich in Montagerichtung erstreckende Rastzungen auf, welche im eingesteckten Zustand in Ausnehmungen in eine Umfangswand des Muffenabschnitts in axialer Richtung formschlüssig rastend eingreifen. Weiterhin weist dieser Steckverbinder sich gegen die Montagerichtung erstreckende Rastarme auf, welche die Bewegung des Gegensteckverbinders gegen die Montagerichtung verhindern. Als nachteilig hat sich herausgestellt, dass die Rastzungen, welche den Klammerkäfig formschlüssig im Muffenabschnitt halten, derart groß dimensioniert werden müssen, dass ein relativ großer Bauraum benötigt wird.

Die WO 2015/181396 A2 sieht zur Vermeidung eines ungewollten Lösens des Gegensteckverbinders ein am Außenumfang des Muffenabschnitts angeordnetes Verriegelungselement vor. Das Verriegelungselement ist axial zur Montagerichtung verschiebbar angeordnet, wobei das Verriegelungselement in einer Verriegelungsstellung eine radiale Spreizung der Rastarme und dadurch eine Freigabe des Gegensteckverbinders verhindert. Hierbei hat sich gezeigt, dass das Verriegelungselement auch ohne eingesteckten Gegensteckverbinder in die Verriegelungsstellung übergehen kann und ein Einstecken des Gegensteckverbinders verhindert. Weiterhin sind zum Verriegeln zusätzliche Montageschritte notwendig, welche ebenfalls den Montageaufwand vergrößern.

Aus WO 2021/190897 A1 ist ein gattungsbildender Steckverbinder bekannt. Der Steckverbinder weist einen Klammerkäfig auf, der in einem Aufnahmekanal angeordnet ist. Der Klammerkäfig wird durch eine Kombination aus einem Formschlusselement, einem Haltemittel und einem Verriegelungselement fixiert.

Aus EP 3 171 066 A1 und US 2017/067588 A1 sind Steckverbinder bekannt, bei denen der Gegenstecker einen Kragen aufweist. Der Gegenstecker liegt mit dem Kragen an einer Seite an einem Haltearm einer Halteklammer und an einer gegenüberliegenden Seite des Kragens an einem Flansch der Halteklammer an.

Ein weiterer Nachteil sind die Rastarme, welche den Steckerschaft des Gegensteckverbinders zur Wahrung der radialelastischen Eigenschaften über eine bestimmte axiale Länge überdecken, dabei allerdings nur eine relativ geringe flächenmäßige Überdeckung des Gegensteckverbinders bieten. Speziell bei großen Baugrößen und Vibrationen, insbesondere bei Gegensteckverbindern mit einem Steckdurchmesser über 14 mm, kann es daher unter besonderen Voraussetzungen zu einem Versagen und einem Lösen des Gegensteckverbinders vom Steckverbinder kommen. Als nachteilig hat sich zudem herausgestellt, dass es bei großer Zug- oder Druckbelastung zu Leckagen oder Beschädigungen des Klammerkäfigs kommen kann.

Der Erfindung liegt die Aufgabe zugrunde, einen Steckverbinder zur Verfügung zu stellen, welcher die aus dem Stand der Technik bekannten Nachteile überwindet und insbesondere zumindest die Widerstandsfähigkeit, die Dichtigkeit und/oder die Montage verbessert.

Die Aufgabe wird erfindungsgemäß durch die Merkmale des kennzeichnenden Teils des Anspruchs 1 gelöst. Dadurch, dass die Halteklammer zwei radial zur Durchgangsöffnung elastische Lagerarme aufweist und die Lagerarme den Klammerkäfig in dem Aufnahmekanal axial zur Montagerichtung formschlüssig fixieren und in einem Ruhezustand der Lagerarme in die Durchgangsöffnung hineinragen und radial zur Durchgangsöffnung elastisch in einen Spannungszustand aufweitbar ausgebildet sind, wird die axiale Erstreckung des Klammerkäfigs verkürzt, so dass Bauraum gespart wird, welcher optional zusätzlichen Dichtmitteln zur Verfügung gestellt werden kann.

Weiterhin hat die erfindungsgemäße Halteklammer den Vorteil, dass sie sowohl den Klammerkäfig in dem Aufnahmekanal des Muffenabschnitts als auch den Gegensteckverbinder in der Durchgangsöffnung des Klammerkäfigs fixiert. Zweckmäßig wird die Anzahl der Elemente des Steckverbinders durch die Integration der Vormontagesicherung in die Halteklammer verringert, was ebenfalls eine Verringerung der Montageschritte zur Folge hat.

Zudem wird mit der erfindungsgemäßen Ausführung eine technische Möglichkeit bereitgestellt, dass in dem Ruhezustand der Lagerarme die Halteklammer nicht in die Blockierstellung überführt werden kann. Vorteilhaft wird dadurch eine Vormontagesicherung zur Verfügung gestellt, welche verhindert, dass bereits vor dem Einstecken des Gegensteckverbinders in die Durchgangsöffnung die Halteklammer in die Blockierstellung verschoben wird und ein Einstecken des Gegensteckverbinders verhindert wird.

**In** einer besonderen Ausführung der Erfindung ist während die Lagerarme in dem Ruhezustand sind und die Halteklammer in der Einführstellung ist, die Halteklammer gegen die Verschiebung von der Einführstellung in die Blockierstellung blockiert. Vorteilhaft kann dadurch die Halteklammer nicht in die Blockierstellung überführt werden und ein Einstecken des Gegensteckverbinders blockieren.

Eine weitere vorteilhafte Ausführung sieht vor, dass während die Haltearme im Spannungszustand sind und die Halteklammer in der Einführstellung ist, die Halteklammer gegen die Verschiebung von der Einführstellung in die Blockierstellung blockiert ist. Bei dieser Ausführung wird vorteilhaft verhindert, dass die Halteklammer in die Blockierstellung verschoben wird bevor der Gegensteckverbinder vollständig eingesteckt ist. Insbesondere werden Fehlmontagen unterbunden und eine zusätzliche Montagekontrolle zur Verfügung gestellt.

Weiterhin vorteilhaft ist, dass während die Lagerarme in dem Ruhezustand sind und die Halteklammer in der Blockierstellung ist, die Halteklammer gegen die Verschiebung von der Blockierstellung in die Einführstellung kraftformschlüssig blockiert ist. Vorteilhaft muss, bevor die Halteklammer in die Einführstellung überführt wird, was potenziell die Gefahr eines unbeabsichtigten Lösens des Gegensteckverbinders aus der Durchgangsöffnung ermöglichen könnte, zunächst ein Kraftformschluss überwunden werden. Insbesondere wird durch diese Ausführung die Steckverbindung resistenter gegen äußere Einflüsse wie z. B. Vibrationen.

Bei einem Einsteckvorgang wird der Gegensteckverbinder mit einem Steckerschaft in Montagerichtung in die Durchgangsöffnung gesteckt. Dabei passiert der Steckerschaft in der Durchgangsöffnung einen Abschnitt, in dem die Haltearme in die Durchgangsöffnung ragen, und einen Abschnitt, in dem die Lagerarme in die Durchgangsöffnung ragen. Vorzugsweise sind der Steckerschaft, die Haltearme und die Lagerarme derart zueinander korrespondierend ausgebildet, dass der Steckerschaft eine radial zur Montagerichtung nach außen auf die Haltearme und die Lagerarme wirkende Kraft ausübt. **In** Folge der nach außen wirkenden Kraft werden die Haltearme und die Lagerarme jeweils radial nach außen aus dem Ruhezustand in den Spannungszustand elastisch verformt.

Zweckmäßig weist der Gegensteckverbinder hinter dem Steckerschaft eine Rastnut auf, welche einen geringeren Durchmesser aufweist als der Steckerschaft. Zweckmäßig sind die Haltearme in einem montierten Zustand des Steckverbinders, insbesondere mit vollständig in Montagerichtung in den Durchgangskanal eingestecktem Gegensteckverbinder, benachbart zu der Rastnut des vollständig eingesteckten Gegensteckverbinders angeordnet. Vorteilhaft entspannen sich die Haltearme auf Grund der im Durchmesser reduzierten Rastnut, so dass sich die Haltearme aus dem aufgeweiteten Spannungszustand im Bereich der Rastnut in den Ruhezustand zurückverformen. Zweckmäßig wird dadurch eine axiale Bewegung des Gegensteckverbinders gegen die Montagerichtung formschlüssig blockiert.

Dadurch, dass der Gegensteckverbinder vorteilhafterweise den Spannungszustand und den Ruhezustand der Haltearme und/oder der Lagerarme einstellt, ist es möglich, die Einstecktiefe des Gegensteckverbinders während und nach dem Einstecken zu kontrollieren, indem die Zustände der Haltearme und/oder der Lagerarme kontrolliert werden.

Zweckmäßig ist die Halteklammer U-förmig ausgebildet. Vorzugsweise sind weiterhin die Lagerarme und die Haltearme über einen Verbindungsabschnitt miteinander verbunden. Der Verbindungsabschnitt ist insbesondere gleichzeitig ein Krafteinleitpunkt, so dass die radiale Verschiebung der Halteklammer von der Blockierstellung in die Einführstellung und von der Einführstellung in die Blockierstellung durch einen Zug oder Druck auf den Verbindungsabschnitt hervorgerufen werden kann. Bevorzugt erstrecken sich, insbesondere um den Montageaufwand zu reduzieren, die Lagerarme und die Haltearme gleichgerichtet von dem Verbindungsabschnitt aus zu jeweils einem freien Ende, wobei in einer besonderen Ausführung die Lagerarme und die Haltearme axial voneinander beabstandet, zweckmäßig derart, dass ein Spalt zwischen jeweils einem Lagerarm und einem Haltearm ausgebildet ist, angeordnet sind.

Gemäß einer vorteilhaften Variante des Steckverbinders ist vorgesehen, dass die Halteklammer auf der gegen die Montagerichtung weisende Seite zumindest zwei an den Haltearmen und/oder an dem Verbindungsabschnitt ausgebildete Druckverriegelungshöcker aufweist. Zweckmäßig stehen die Druckverriegelungshöcker gegen die Montagerichtung weisend derart hervor, dass sie sich in der Blockierstellung der Halteklammer radial zur Durchgangsöffnung an einer inneren Umfangswandung der Durchgangsöffnung abstützen können. Insbesondere bei einem vollständig in den Steckverbinder eingesteckten Gegensteckverbinder, wird bei einer Systemdruckbelastung die Halteklammer derart axial gegen die Montagerichtung verschoben, dass sich die Druckverriegelungshöcker in einem Spalt zwischen Steckerschaft und Umfangswandung der Durchgangsöffnung anordnen. Die Druckverriegelungshöcker blockieren dabei, dass sich die Haltearme radial in ihren Spannungszustand aufweiten und/oder, dass die Halteklammer aus der Blockierstellung in die Einführstellung überführt werden kann. Einem ungewollten Lösen der Halteklammer bzw. des Gegensteckverbinders wird mittels der Druckverriegelungshöcker so entgegengewirkt.

Zweckmäßig ist die Halteklammer weiterhin derart ausgebildet, dass bei einem vollständig eingesteckten Gegensteckverbinder die Halteklammer mit einem an die Druckverriegelungshöcker angrenzenden Bereich der gegen die Montagerichtung weisenden Seite auf einer in Montagerichtung weisenden Lagerfläche des Klammerkäfigs axial aufliegt und mit den Druckverriegelungshöckern radial gegen eine Umfangswandung der Durchgangsöffnung anliegt.

Besonders vorteilhaft sind zumindest zwei Druckverriegelungshöcker an den Haltearmen gegenüberliegend zueinander ausgebildet. Dabei sind die Druckverriegelungshöcker bevorzugt derart ausgebildet und angeordnet, dass die Druckverriegelungshöcker in der Blockierstellung der Halteklammer und dem Ruhezustand der Haltearme auf einer Symmetrieachse der Durchgangsöffnung innerhalb der Durchgangsöffnung angeordnet sind. Die Symmetrieachse der Durchgangsöffnung ist insbesondere die, welche sich senkrecht zur Verschieberichtung der Halteklammer erstreckt.

Gemäß einer Variante der Erfindung weist der Klammerkäfig zwei radial zur Durchgangsöffnung geöffnete Fenster auf. Vorteilhaft ist jeweils eine sich axial zur Durchgangsöffnung erstreckende Verstärkungsstrebe in den Fenstern angeordnet. Vorteilhaft wird mittels der Verstärkungsstreben der Steckverbinder, insbesondere der Klammerkäfig, zumindest axial zur Montagerichtung versteift. Die Versteifung hat zudem zur Folge, dass Zug- oder Druckbelastungen gleichmäßiger über den Umfang des Steckverbinders verteilt werden. Insbesondere wird dadurch Leckagen und Beschädigungen vorgebeugt.

Insbesondere greifen, in einer vorteilhaften Ausführung der Erfindung, die Haltearme durch die Fenster derart hindurch, dass die Haltearme radial zwischen der Durchgangsöffnung und den Verstärkungsstreben angeordnet sind. Zweckmäßig sind die Haltearme dabei derart angeordnet, dass die Haltearme im Ruhezustand in die Durchgangsöffnung des Klammerkäfigs hineinragen.

Besonders vorteilhaft weist der Grundkörper vier über den Umfang verteilt ausgebildete axiale Führungsschlitze auf, welche insbesondere um 90° zueinander versetzt angeordnet und gegen die Montagerichtung weisend geöffnet sind. Zweckmäßig sind die Verstärkungsstreben derartig mit einem radialen Überstand zum Klammerkäfig ausgebildet, dass diese zur Anordnung des Klammerkäfigs in dem Aufnahmekanal in die Führungsschlitze eingreifen und eine Verdrehung blockieren.

Vorteilhafterweise sind die Verstärkungsstreben derart mit einem Sockel ausgebildet, dass in einem in dem Aufnahmekanal montierten Zustand des Klammerkäfigs die Sockel einen vorteilhaften Abstand zwischen einem Bund des Klammerkäfigs und einem gegen die Montagerichtung weisenden Ende des Grundkörpers gewährleisten.

In einer bevorzugten Ausführung der Erfindung weisen der Muffenabschnitt und der Klammerkäfig jeweils zumindest zur Montagerichtung radiale Durchbrüche auf. Insbesondere sind jeweils ein Durchbruch des Klammerkäfigs und des Muffenabschnitts in einem eingesteckten Zustand des Klammerkäfigs im Muffenabschnitt fluchtend zueinander angeordnet, so dass die Halteklammer mit den Lagerarmen radial zur Montagerichtung durch die Durchbrüche des Klammerkäfigs und des Muffenabschnitts hindurch in die Durchgangsöffnung des Klammerkäfigs eingeführt werden kann. Insbesondere ist die Anordnung mittels der Lagerarme, welche die jeweiligen Durchbrüche durchgreifen, eine leicht herzustellende und einfache Fixierung des Klammerkäfigs im Muffenabschnitt des Grundkörpers.

Zweckmäßig sind die radial geöffneten Fenster zur Anordnung und Durchführung der Haltearme axial zur Montagerichtung von den Durchbrüchen zur Anordnung und Durchführung der Lagerarme beabstandet angeordnet. Besonders vorteilhaft für eine einfache und schnelle Montage der Halteklammer, insbesondere für die Verschiebungen zwischen der Blockierstellung und der Einführstellung, sind die Fenster und Durchbrüche axial hintereinander, insbesondere ohne einen Winkelversatz zur Durchgangsöffnung, angeordnet. Vorteilhaft sind die Lagerarme und die Haltearme korrespondierend axial hintereinander an der Halteklammer ausgebildet, so dass jeweils ein Haltearm und ein Lagerarm axial versetzt angeordnet sind.

Vorzugsweise weist der Klammerkäfig radial nach außen weisende Rastmittel auf. Die Lagerarme weisen vorteilhafterweise zu den Rastmitteln korrespondierende Lagernuten auf. Insbesondere greifen die Rastmittel in dem Ruhezustand der Lagerarme und der Einführstellung der Halteklammer in die Lagernuten ein. Vorteilhaft wird dadurch gewährleistet, dass die Rastmittel im Ruhezustand der Lagerarme eine Verschiebung der Halteklammer von der Einführstellung in die Blockierstellung formschlüssig blockiert ist.

Gemäß einer Weiterentwicklung weisen die Lagerarme radial nach innen weisende Spreizmittel auf. Zweckmäßig ragen die Spreizmittel in der Einführstellung der Halteklammer und dem Ruhezustand der Lagerarme derart in die Durchgangsöffnung hinein, dass die Lagerarme über die Spreizmittel beim Einführen des Gegensteckverbinders in Montagerichtung von dem Ruhezustand in den Spannungszustand aufweitbar sind. Insbesondere hebt dabei der Steckerschaft des Gegensteckverbinders die Rastmittel aus den Lagernuten, wodurch vorteilhaft eine Verschiebung der Halteklammer von der Einführstellung in die Blockierstellung freigegeben wird. Diese Ausführung verbessert die Sicherheit derart, dass die Halteklammer in einem vormontierten oder teilmontierten Zustand, mit einem nicht oder nicht vollständig eingesteckten Gegensteckverbinder, in die Blockierstellung überführt wird und unbeabsichtigt mit den Haltearmen das Einstecken des Gegensteckverbinders blockiert.

Eine weitere Variante sieht vor, dass vorteilhaft die Lagernuten in einer Erstreckungsrichtung der Lagerarme hinter den Spreizmitteln angeordnet sind. Insbesondere ist zwischen der jeweiligen Lagernut und dem jeweiligen Spreizmittel eine Positionsnut ausgebildet. Bevorzugt ist das Rastmittel des Klammerkäfigs in dem Ruhezustand der Lagerarme und in der Blockierstellung der Halteklammer derart in der Positionsnut angeordnet, dass sich das Spreizmittel auf einem Außenumfang des Gegensteckverbinders, insbesondere des Steckerschafts des Gegensteckverbinders, kraftformschlüssig abstützt und zweckmäßig einen Widerstand gegen eine Verschiebung der Halteklammer von der Blockierstellung in die Einführstellung erzeugt. Der Widerstand ist besonders vorteilhaft, um ein ungewolltes Freigeben einer Verschiebung der Halteklammer von der Blockierstellung in die Einführstellung zu verhindern. Dies hätte potenziell ein unkontrollierbares Lösen des Steckerschafts aus der Durchgangsöffnung bzw. ein Verschieben des Gegensteckverbinders entgegen der Montagerichtung aus der Durchgangsöffnung zur Folge. Insbesondere ist diese Ausführung daher bei hohen Vibrationen und anderen äußeren Einflüssen auf die Steckverbindung vorteilhaft.

Zweckmäßig weisen die Lagerarme jeweils zumindest eine zum freien Ende der Lagerarme ansteigende Dehnungsschräge auf. Insbesondere mündet jeweils eine Dehnungsschräge oberhalb der Lagernut. Es ist vorzuziehen, dass sich die Lagernut unmittelbar der Dehnungsschräge anschließt. Insbesondere kann das Rastmittel bei dem Überführen der Halteklammer von der Blockierstellung in die Einführstellung über die Dehnungsschräge gleiten, so dass der Lagerarm materialschonend radial nach außen elastisch verformt wird und das Rastmittel aus der Positionsnut herausgehoben wird. Vorteilhaft wird synergetisch eine Blockade zwischen Rastmittel und Positionsnut überwunden.

Alternativ oder ergänzend zu der vorgenannten Ausführung hat es sich als vorteilhaft herausgestellt, dass jeweils eine der zum freien Ende der Lagerarme ansteigenden Dehnungsschrägen oberhalb der Positionsnut mündet und sich die Positionsnut unmittelbar den Dehnungsschrägen anschließt. Insbesondere bei dem Verschieben der Halteklammer von der Blockierstellung in die Einführstellung stützt sich die Dehnungsschräge der Positionsnut auf einem Außenumfang des Gegensteckverbinders, insbesondere des Steckerschafts des Gegensteckverbinders, ab, so dass der Lagerarm materialschonend radial nach außen elastisch verformt wird und das Rastmittel aus der Positionsnut herausgehoben wird. Vorteilhaft wird synergetisch eine Blockade zwischen Rastmittel und Positionsnut überwunden.

Die Dehnungsschrägen haben den Vorteil, dass bei einer Verschiebung der Halteklammer radial zur Durchgangsöffnung von der Blockierstellung in die Einführstellung synergetisch mit der Verschiebung der Lagerarm radialelastisch verformt wird. Die Blockade zwischen Rastmittel und Positionsnut ist dadurch als ein überwindbarer Widerstand ausgebildet, welcher ausreichend stark dimensioniert ist, dass ein unbeabsichtigter Lagewechsel verhindert wird. Insbesondere kann über einen Stellwinkel der jeweiligen Dehnungsschrägen der zu überwindende Widerstand eingestellt werden.

Eine weitere Ausführung sieht vor, dass die Lagernuten, in die Erstreckungsrichtung der Lagerarme betrachtet, vor den Spreizmitteln angeordnet sind. Zweckmäßig ist dabei, dass das Rastmittel des Klammerkäfigs in dem Ruhezustand der Lagerarme und in der Einführstellung der Halteklammer derart in der Lagernut angeordnet ist, dass ein Widerstand gegen eine Verschiebung der Halteklammer von der Einführstellung in die Blockierstellung erzeugt ist.

Gemäß einer vorteilhaften Variante der zuvor beschriebenen Ausführung der Erfindung weisen die Lagerarme jeweils zumindest eine zum freien Ende der Lagerarme ansteigende Dehnungsschräge auf. Insbesondere mündet jeweils eine Dehnungsschräge oberhalb der Lagernut. Die Lagernut schließt sich vorzugsweise unmittelbar der Dehnungsschräge an. Alternativ oder ergänzend ist jeweils eine Dehnungsschräge an den Spreizmitteln ausgebildet. Vorzugsweise kann sich in dem Ruhezustand der Lagerarme und der Blockierstellung der Halteklammer das Spreizmittel auf einem Außenumfang des Gegensteckverbinders kraftformschlüssig abstützen und dadurch einen Widerstand gegen eine Verschiebung der Halteklammer von der Blockierstellung in die Einführstellung erzeugen.

In einer Variante der Erfindung haben die Haltearme jeweils eine radial nach außen geöffnete Haltenut ausgebildet. Vorzugsweise ist diese Haltenut derart korrespondierend zu einem Blockiermittel des Klammerkäfigs ausgebildet, dass in dem Spannungszustand der Haltearme und in der Einführstellung der Halteklammer das Blockiermittel in der Haltenut angeordnet ist. Vorteilhaft ist das Blockiermittel derart in der Haltenut angeordnet, dass eine Verschiebung der Halteklammer von der Einführstellung in die Blockierstellung blockiert ist.

Es hat sich als vorteilhaft für die Montagesicherheit gezeigt, dass mittels dieser Ausführung die Halteklammer erst von der Einführstellung in die Blockierstellung überführt werden kann, wenn der Gegensteckverbinder mit dem Steckerschaft vollständig in der Durchgangsöffnung angeordnet ist. Insbesondere ist der Gegensteckverbinder mit dem Steckerschaft vollständig in der Durchgangsöffnung angeordnet, wenn die Rastnut des Gegensteckverbinders benachbart zu den Haltearmen angeordnet ist. Vorteilhaft formen sich die elastisch in den Spannungszustand verformten Haltearme, wenn der Gegensteckverbinder mit dem Steckerschaft vollständig eingesteckt ist, zurück in den Ruhezustand, wobei sie sich in der Rastnut anordnen. Zweckmäßig ist daraufhin, wenn die Haltearme im Ruhezustand sind, das Blockiermittel aus der Haltenut gehoben und die Blockade gegen eine Überführung der Halteklammer von der Einführstellung in die Blockierstellung aufgehoben ist. Dadurch, dass die Überführung der Halteklammer von der Einführstellung in die Blockierstellung erst möglich ist, wenn die Haltearme im Ruhezustand sind, ist eine einfache Kontrolle des Einsteckzustandes des Gegensteckverbinders möglich.

Bevorzugt ist eine erste zum freien Ende des Haltearms weisende Nutwand der Haltenut von einem radial vom Haltearm nach außen abstehenden Lagerelement ausgebildet. Insbesondere in dem Ruhezustand des Haltearms und der Blockierstellung der Halteklammer liegt das Lagerelement radial zu der Durchgangsöffnung nach außen weisend an dem Blockiermittel derart an, dass zweckmäßig eine radiale Dehnung der Haltearme in den Spannungszustand blockiert ist. **In** diesem Zustand ist zudem vorteilhaft die Überführung der Haltearme von dem Ruhezustand in den Spannungszustand blockiert.

Vorteilhaft unterbindet diese Variante der Erfindung ein ungewolltes Lösen des Gegensteckverbinders aus der Durchgangsöffnung, nachdem die Halteklammer nach vollständigem Einstecken des Gegensteckverbinders in die Durchgangsöffnung in die Blockierstellung überführt wurde. Insbesondere ist es zum Aufheben der Blockade gegen die elastische Verformung der Haltearme in den Spannungszustand notwendig, dass die Halteklammer in die Einführstellung überführt wird. **In** Kombination mit einer vorgenannten vorteilhaften Ausführung ergibt sich synergetisch der Effekt, dass erst der durch die Dehnungsschrägen erwirkte Widerstand überwunden werden muss, um die Halteklammer in die Einführstellung zu überführen. Es wird somit eine Möglichkeit bereitgestellt, ein ungewolltes Verschieben des Gegensteckverbinders gegen die Montagerichtung aus der Durchgangsöffnung zu verhindern.

Zweckmäßig ist das Lagerelement als ein Rampenelement ausgebildet, wobei das Rampenelement vorzugsweise eine zum freien Ende des Haltearms ansteigende Schrägfläche aufweist. Zweckmäßig mündet die Schrägfläche an der ersten Nutwand der Haltenut. Insbesondere haben die Schrägfläche fertigungstechnische Vorteile.

Insbesondere kann das Lagerelement, vorzugsweise das Rampenelement, korrespondierend mit dem Blockiermittel derart ausgebildet sein, dass der Haltearm in dem Ruhezustand geringfügig elastisch radial nach innen gedrückt wird, so dass eine radiale Rückstellkraft des Haltearms das Lagerelement gegen das Blockiermittel drückt, um beispielsweise Vibrationen und gegeneinanderstoßende Bauteile zu vermeiden.

Zweckmäßig dienen die vorteilhaften Verstärkungsstreben als Blockiermittel, so dass die als Blockiermittel ausgebildeten Verstärkungsstreben vorteilhaft in dem Ruhezustand der Haltearme und in der Einführstellung der Halteklammer in den Haltenuten angeordnet sind. Es stellt sich der Effekt ein, dass die Steifigkeit des Klammerkäfigs und gleichzeitig die Montagesicherheit des Steckverbinders verbessert wird.

Gemäß einer bevorzugten Ausführung der Erfindung weist die Halteklammer zumindest einen Stützarm auf. Es hat sich zudem eine Variante mit zwei oder mehr Stützarmen ebenfalls als vorteilhaft erwiesen. Der Stützarm ist zweckhaft zwischen den Lagerarmen angeordnet und ist insbesondere sich parallel zu den Lagerarmen zu einem Stützkopf erstreckend ausgebildet. Zweckmäßig ist in der Blockierstellung der Halteklammer der Stützkopf in einer korrespondierend ausgebildeten Kopfaufnahme im Außenumfang des Klammerkäfigs angeordnet. Der Stützkopf bildet zusammen mit der Kopfaufnahme einen Anschlag, so dass eine radiale Verschiebung der Halteklammer von der Einführstellung über die Blockierstellung hinaus durch die Anlage des Stützkopfs an die Kopfaufnahme blockiert wird. Insbesondere weisen Ausführungen mit zwei oder mehr Stützarmen eine entsprechend korrespondierende Anzahl an Kopfaufnahmen auf.

In einer weiterentwickelten Ausführung der Steckverbindung weist die Halteklammer zumindest einen Führungsstift auf, welcher zwischen den Haltearmen angeordnet ist. Vorzugsweise ist der Führungsstift sich parallel zu den Haltearmen zu einem Auflageende erstreckend ausgebildet. Zweckmäßig hat es sich als vorteilhaft erwiesen, dass in der Blockierstellung der Halteklammer der Führungsstift mit seinem Auflageende an einem Außenumfang des Klammerkäfigs anliegt. Entsprechend den Stützarmen bildet der Führungsstift zusammen mit dem Außenumfang des Klammerkäfigs einen Anschlag, so dass eine radiale Verschiebung der Halteklammer von der Einführstellung über die Blockierstellung hinaus durch die Anlage des Stützkopfs an die Kopfaufnahme blockiert wird.

Für eine bessere Montage und insbesondere eine bessere Führung der Halteklammer weist der Klammerkäfig einen korrespondierend zum Führungsstift ausgebildeten Führungskanal auf. Der Führungsstift ragt dabei in der Blockierstellung der Halteklammer in den Führungskanal ein, so dass die Halteklammer beim Überführen zwischen der Blockierstellung und der Einführstellung sich nicht verdrehen und/oder verkeilen kann.

Zweckmäßig erstreckt sich der Führungskanal durch zwei Lagersockel hindurch, welche vorzugsweise derart ausgebildet sind, dass in dem in dem Aufnahmekanal montierten Zustand des Klammerkäfigs, die Lagersockel einen vorteilhaften Abstand zwischen dem Bund des Klammerkäfigs und dem gegen die Montagerichtung weisenden Ende des Grundkörpers gewährleisten.

Hinsichtlich einer besseren Demontage sieht eine bevorzugte Variante der Erfindung vor, dass die Halteklammer zumindest einen, insbesondere zwei, sich gegenüberliegende, radialelastische Greifarme aufweist. Zweckmäßig erstrecken sich die Greifarme von einem an den Verbindungsabschnitt und/oder den Haltearmen angeformten Abschnitt aus weisend in Richtung zu den freien Enden der Haltearme. Insbesondere sind die Greifarme jeweils mit einem Endabschnitt radial von den Halteatmen beabstandet ausgebildet, so dass die Greifarme mit einer radial auf den Endabschnitt wirkenden Kraft zu den Haltearmen hin elastisch verformt werden können. Insbesondere um die Halteklammer aus der Blockierstellung heraus in die Einführstellung zu überführen, bieten die Greifarme eine bevorzugte Angriffskontur zum Ergreifen mit einer Hand oder mit einem Werkzeug.

Es hat sich als besonders vorteilhaft erwiesen, dass der Klammerkäfig formschlüssig mittels zumindest einem, insbesondere zwei gegenüberliegenden, Rastarm in dem Aufnahmekanal gehalten ist. Zweckmäßig ist der Rastarm radialelastisch ausgebildet und weist einen radial nach außen hervorstehenden Rastfortsatz auf. Vorteilhaft greift der Rastfortsatz im eingesteckten Zustand in eine Ausnehmung in einer Umfangswand des Muffenabschnitts formschlüssig ein, so dass der Klammerkäfig in dem Muffenabschnitt gehalten ist. Zu diesem Zweck ist der Rastarm vorzugsweise am äußeren Umfang des Klammerkäfigs angeformt.

Eine weitere alternative oder ergänzende Ausführung zum Halten des Klammerkäfigs in dem Aufnahmekanal sieht vor, dass die Halteklammer zwischen den Lagerarmen zumindest ein radial zur Durchgangsöffnung hervorstehenden Zapfen aufweist. Der Muffenabschnitt und der Klammerkäfig weisen dabei jeweils zumindest eine zur Montagerichtung radiale Durchführungsöffnung auf. Zweckmäßig sind jeweils eine Durchführungsöffnung des Klammerkäfigs und des Muffenabschnitts in einem eingesteckten Zustand des Klammerkäfigs im Muffenabschnitt fluchtend zueinander angeordnet, so dass die Halteklammer mit dem Zapfen radial zur Montagerichtung durch die Durchführungsöffnung des Klammerkäfigs und des Muffenabschnitts hindurch eingeführt werden kann. In der eingeführten Lage des Zapfens in den Durchführungsöffnungen blockiert der Zapfen formschlüssig, so dass der Klammerkäfig axial zu dem Aufnahmekanal verschoben wird.

Weitere vorteilhafte Ausgestaltungen der Erfindung ergeben sich aus der folgenden Figurenbeschreibung und den abhängigen Unteransprüchen.

Es zeigen:
- Fig. 1: eine Explosionsansicht eines erfindungsgemäßen Steckverbinders,
- Fig. 2: eine perspektivische Ansicht eines erfindungsgemäßen Klammerkäfigs,
- Fig. 3: eine perspektivische Ansicht einer erfindungsgemäßen Halteklammer,
- Fig. 4: eine Schnittansicht entlang einer Montagerichtung eines erfindungsgemäßen Steckverbinders mit einem teilweise eingeführten Gegensteckverbinder in einem ersten Montagezustand mit der Halteklammer in Einführstellung,
- Fig. 5: eine Schnittansicht entlang der Trennlinie A-A gemäß Fig. 4,
- Fig. 6: eine Schnittansicht entlang der Trennlinie B-B gemäß Fig. 4,
- Fig. 7: eine Schnittansicht entlang einer Montagerichtung eines erfindungsgemäßen Steckverbinders mit einem teilweise eingeführten Gegensteckverbinder in einem zweiten Montagezustand mit der Halteklammer in Einführstellung,
- Fig. 8: eine Schnittansicht entlang der Trennlinie C-C gemäß Fig. 7,
- Fig. 9: eine Schnittansicht entlang der Trennlinie D-D gemäß Fig. 7,
- Fig. 10: eine Schnittansicht entlang einer Montagerichtung eines erfindungsgemäßen Steckverbinders mit einem vollständig eingeführten Gegensteckverbinder in einem dritten Montagezustand mit der Halteklammer in Einführstellung,
- Fig. 11: eine Schnittansicht entlang der Trennlinie E-E gemäß Fig. 10,
- Fig. 12: eine Schnittansicht entlang der Trennlinie F-F gemäß Fig. 10,
- Fig. 13: eine Schnittansicht entlang einer Montagerichtung eines erfindungsgemäßen Steckverbinders mit einem vollständig eingeführten Gegensteckverbinder in einem vierten Montagezustand mit der Halteklammer in Blockierstellung,
- Fig. 14: eine Schnittansicht entlang der Trennlinie G-G gemäß Fig. 13 und
- Fig. 15: eine Schnittansicht entlang der Trennlinie H-H gemäß Fig. 13.
- Fig. 16: eine Explosionsansicht eines weiteren erfindungsgemäßen Steckverbinders,
- Fig. 17: eine perspektivische Ansicht eines weiteren erfindungsgemäßen Klammerkäfigs,
- Fig. 18: eine perspektivische Ansicht einer weiteren erfindungsgemäßen Halteklammer,
- Fig. 19: eine Schnittansicht entlang einer Montagerichtung des erfindungsgemäßen Steckverbinders aus Fig. 1 mit einem nicht eingeführten Gegensteckverbinder in einem ersten Montagezustand mit der Halteklammer in Einführstellung,
- Fig. 20: eine Schnittansicht entlang der Trennlinie I-I gemäß Fig. 19,
- Fig. 21: eine Schnittansicht entlang der Trennlinie J-J gemäß Fig. 19,
- Fig. 22: eine Schnittansicht entlang einer Montagerichtung eines erfindungsgemäßen Steckverbinders mit einem teilweise eingeführten Gegensteckverbinder in einem zweiten Montagezustand mit der Halteklammer in Einführstellung,
- Fig. 23: eine Schnittansicht entlang der Trennlinie K-K gemäß Fig. 22,
- Fig. 24: eine Schnittansicht entlang der Trennlinie L-L gemäß Fig. 22,
- Fig. 25: eine Schnittansicht entlang einer Montagerichtung eines erfindungsgemäßen Steckverbinders mit einem teilweise eingeführten Gegensteckverbinder in einem dritten Montagezustand mit der Halteklammer in Einführstellung,
- Fig. 26: eine Schnittansicht entlang der Trennlinie M-M gemäß Fig. 25,
- Fig. 27: eine Schnittansicht entlang der Trennlinie N-M gemäß Fig. 25,
- Fig. 28: eine Schnittansicht entlang einer Montagerichtung eines erfindungsgemäßen Steckverbinders mit einem vollständig eingeführten Gegensteckverbinder in einem vierten Montagezustand mit der Halteklammer in Einführstellung,
- Fig. 29: eine Schnittansicht entlang der Trennlinie O-O gemäß Fig. 28,
- Fig. 30: eine Schnittansicht entlang der Trennlinie P-P gemäß Fig. 28.
- Fig. 31: eine Schnittansicht entlang einer Montagerichtung eines erfindungsgemäßen Steckverbinders mit einem vollständig eingeführten Gegensteckverbinder in einem fünften Montagezustand mit der Halteklammer in Blockierstellung,
- Fig. 32: eine Schnittansicht entlang der Trennlinie Q-Q gemäß Fig. 31,
- Fig. 33: eine Schnittansicht entlang der Trennlinie R-R gemäß Fig. 31,
- Fig. 34: eine Schnittansicht entlang der Trennlinie S-S gemäß Fig. 31,
- Fig. 35: eine perspektivische Ansicht eines weiteren erfindungsgemäßen Klammerkäfigs,
- Fig. 36: eine perspektivische Ansicht einer weiteren erfindungsgemäßen Halteklammer,
- Fig. 37: eine Schnittansicht entlang einer Montagerichtung eines erfindungsgemäßen Steckverbinders mit einem vollständig eingeführten Gegensteckverbinder ohne eine Systemdruckbelastung,
- Fig. 38: eine Detailansicht des Bereichs T gemäß Fig. 37
- Fig. 39: eine Schnittansicht entlang einer Montagerichtung eines erfindungsgemäßen Steckverbinders mit einem vollständig eingeführten Gegensteckverbinder mit einer Systemdruckbelastung und
- Fig. 40: eine Detailansicht des Bereichs V gemäß Fig. 39

**In** den verschiedenen Figuren der Zeichnung sind gleiche Teile stets mit denselben Bezugszeichen versehen.

Zu der anschließenden Beschreibung wird beansprucht, dass die Erfindung nicht auf die Ausführungsbeispiele und dabei nicht auf alle oder mehrere Merkmale von beschriebenen Merkmalskombinationen beschränkt ist, vielmehr ist jedes einzelne Teilmerkmal des/jedes Ausführungsbeispiels auch losgelöst von allen anderen im Zusammenhang damit beschriebenen Teilmerkmalen für sich und auch in Kombination mit beliebigen Merkmalen eines anderen Ausführungsbeispiels von Bedeutung für den Gegenstand der Erfindung.

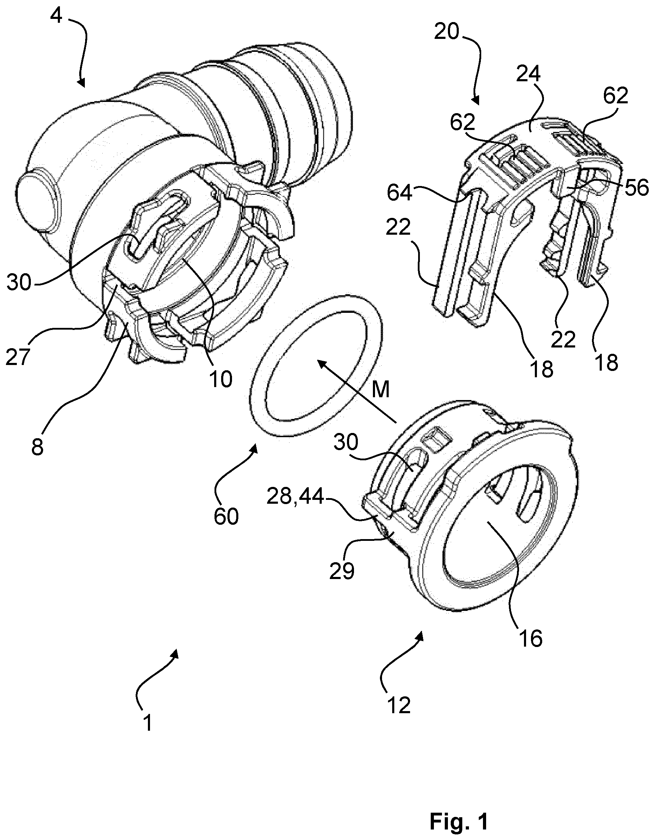

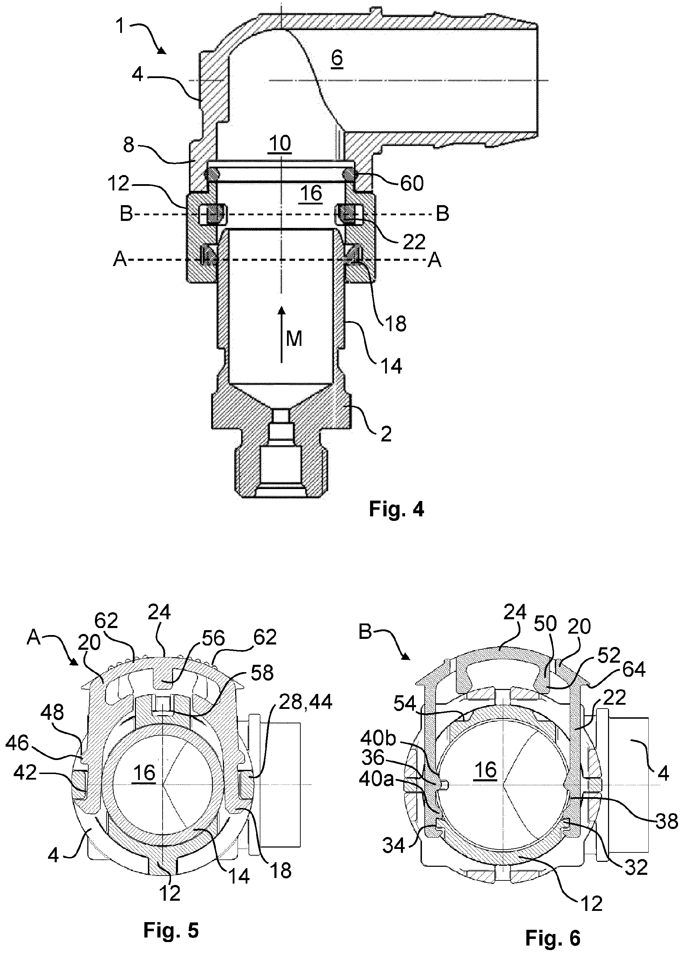

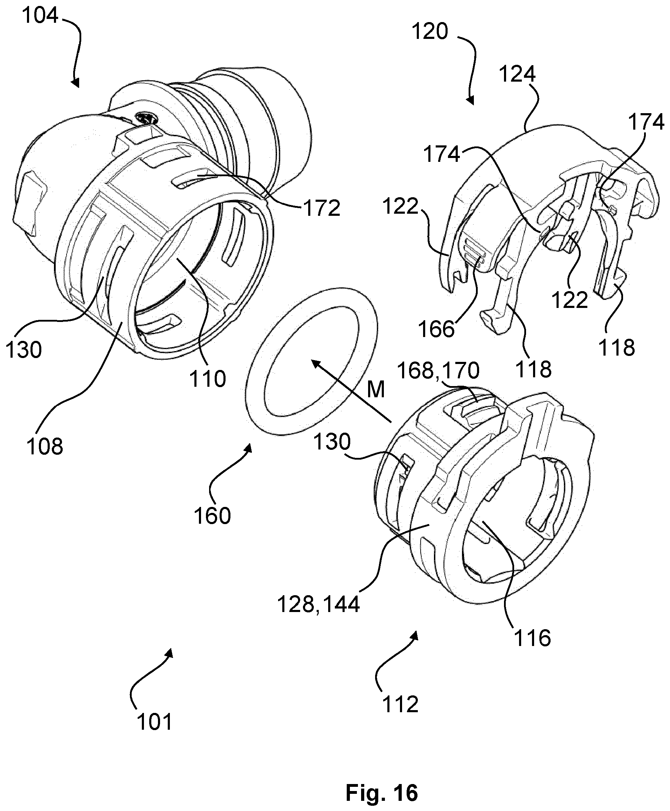

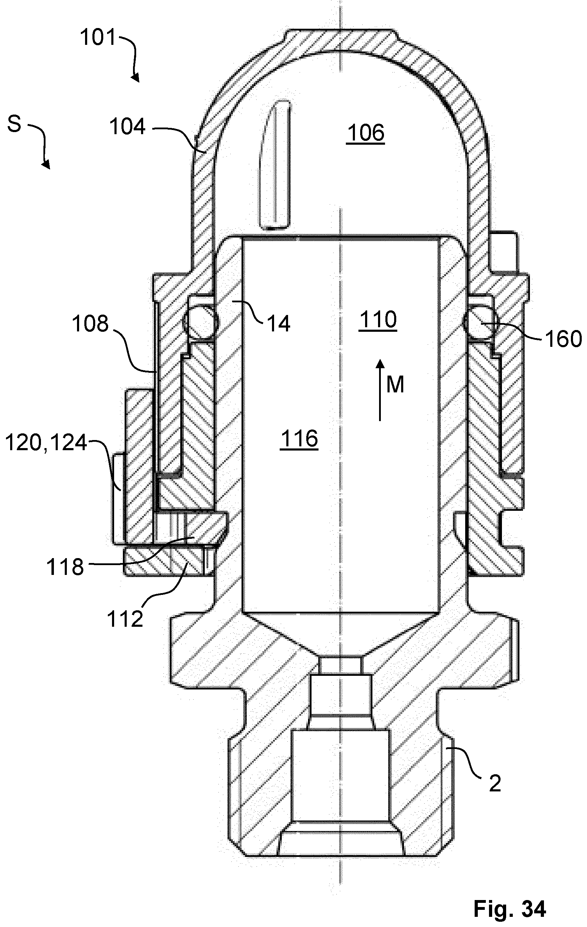

Die Fig. 1 und 16 zeigen einen Steckverbinder 1, 101 zum Verbinden von einer ersten Fluidleitung mit einem Gegensteckverbinder 2. Der Gegensteckverbinder 2 ist insbesondere in den Fig. 4, 7, 10, 13, 19, 22, 25, 28, 31, 34, 37 und 39 im Zusammenschau mit dem Steckverbinder 1, 101, 201 dargestellt.

Der Steckverbinder 1, 101, 201 weist einen in den Fig. 1, 16, 37 und 39 dargestellten Grundkörper 4, 104, 204 mit einem Durchgangskanal 6, 106, 206 auf. Insbesondere ist in den Fig. 4, 19, 22 und 37 dargestellt, dass der Durchgangskanal 6, 106, 206 fluidisch mit einem als Muffenabschnitt 8, 108, 208 ausgebildeten Ende des Grundkörpers 4, 104, 204 verbunden ist.

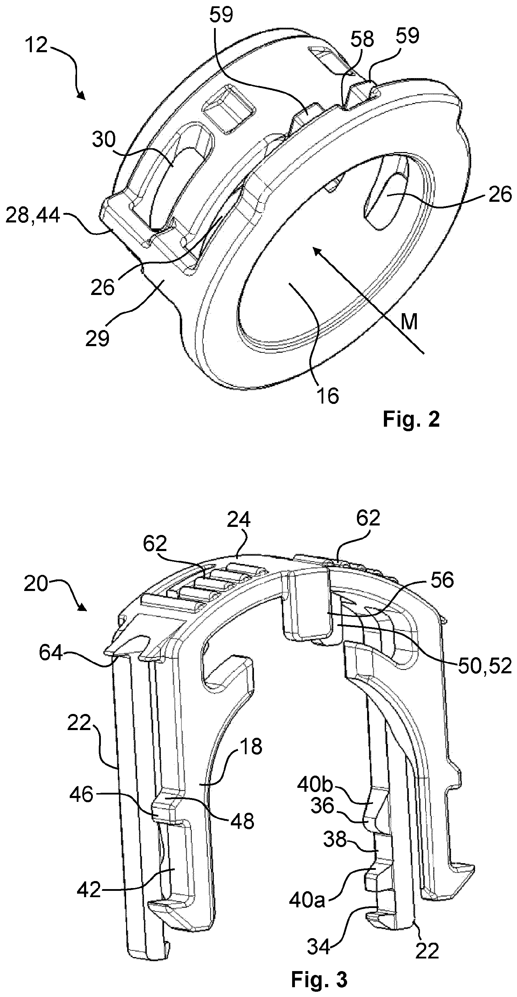

**In** einem Aufnahmekanal 10, 110, 210 des Muffenabschnitts 8, 108, 208 ist ein Klammerkäfig 12, 112, 212 angeordnet. Der Klammerkäfig 12, 112, 212 ist lösbar in dem Aufnahmekanal 10, 110, 210 anordenbar. Der Klammerkäfig 12, 112, 212 ist insbesondere in den Fig. 2, 17 und 35 dargestellt. Der Klammerkäfig 12, 112, 212 ist, wie in den Fig. 1 und 16 angedeutet, in eine Montagerichtung M in den Aufnahmekanal 10, 110, 210 des Muffenabschnitts 8, 108, 208 einsteckbar und formschlüssig axial zur Montagerichtung M gehalten.

Der Klammerkäfig 12, 112, 212 wird mittels zwei Haltearmen 18, 118, 218 einer senkrecht zur Montagerichtung M in den Klammerkäfig 12, 112, 212 einsteckbaren Halteklammer 20, 120, 220 in einer Durchgangsöffnung 16, 116, 216 des Muffenabschnitts 8, 108, 208 gehalten. Die Halteklammer 20, 120, 220 ist in Fig. 1, 3, 16, 18 und 36 dargestellt.

Die zwei Haltearme 18, 118, 218 der Halteklammer 20, 120, 220 sind parallel zueinander verlaufend ausgebildet und ragen in einem Ruhezustand der Halteklammer 20, 120, 220 in die Durchgangsöffnung 16, 116, 216 des Klammerkäfigs 12, 112, 212 hinein. Weiterhin sind die Haltearme 18, 118, 218 radial zur Durchgangsöffnung 16, 116, 216 elastisch in einen Spannungszustand aufweitbar ausgebildet.

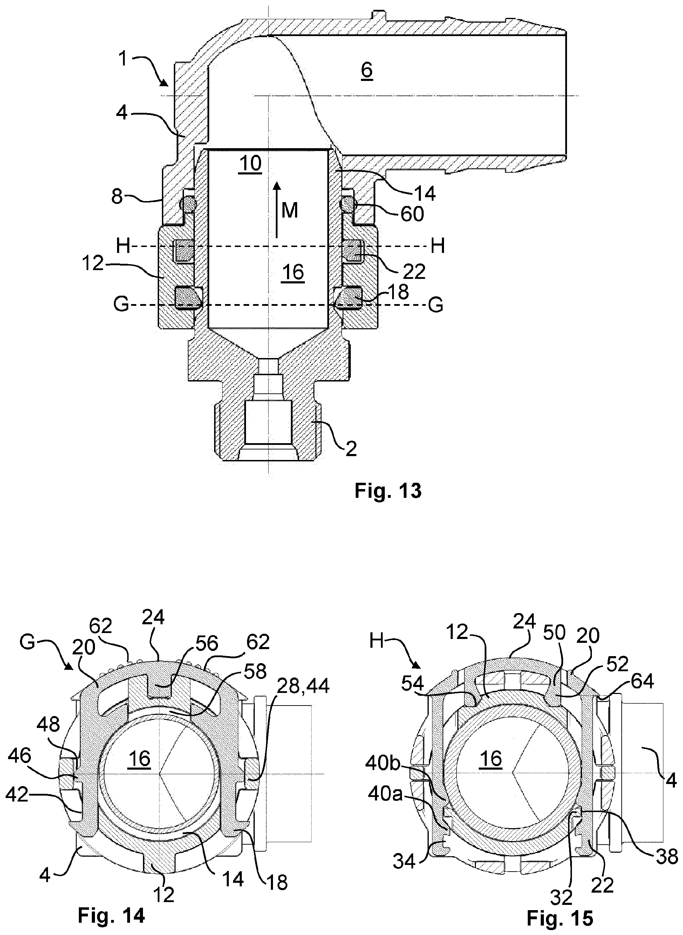

Die Halteklammer 20, 120, 220 ist radial zur Durchgangsöffnung 16, 116, 216 von einer, insbesondere in den Fig. 5, 6, 8, 9, 11, 12, 20, 21, 23, 24, 26, 27, 29 und 30 dargestellten, Einführstellung in eine, in den Fig. 14, 15, 32, 33, 39 dargestellten, Blockierstellung und von der Blockierstellung in die Einführstellung verschiebbar ausgebildet.

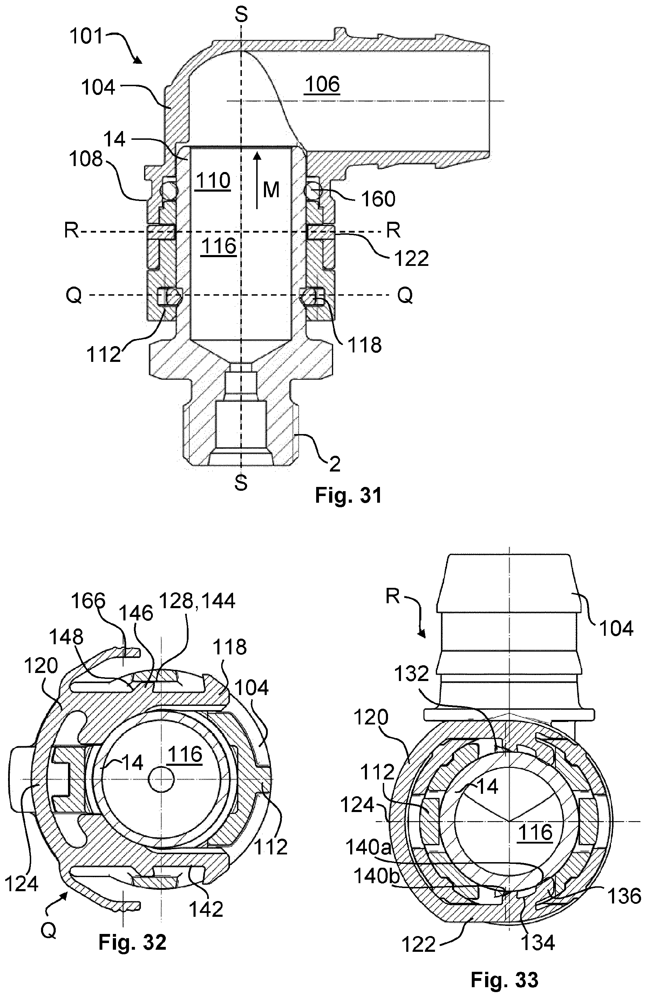

Die Haltearme 18, 118, 218 sind in der Einführstellung der Halteklammer 20, 120, 220 in ihren Spannungszustand aufweitbar. Weiterhin sind die Haltearme 18, 118, 218 in der Blockierstellung der Halteklammer 20, 120, 220, wie in den Fig. 14 und 32 dargestellt, gegen eine Aufweitung in den Spannungszustand blockiert.

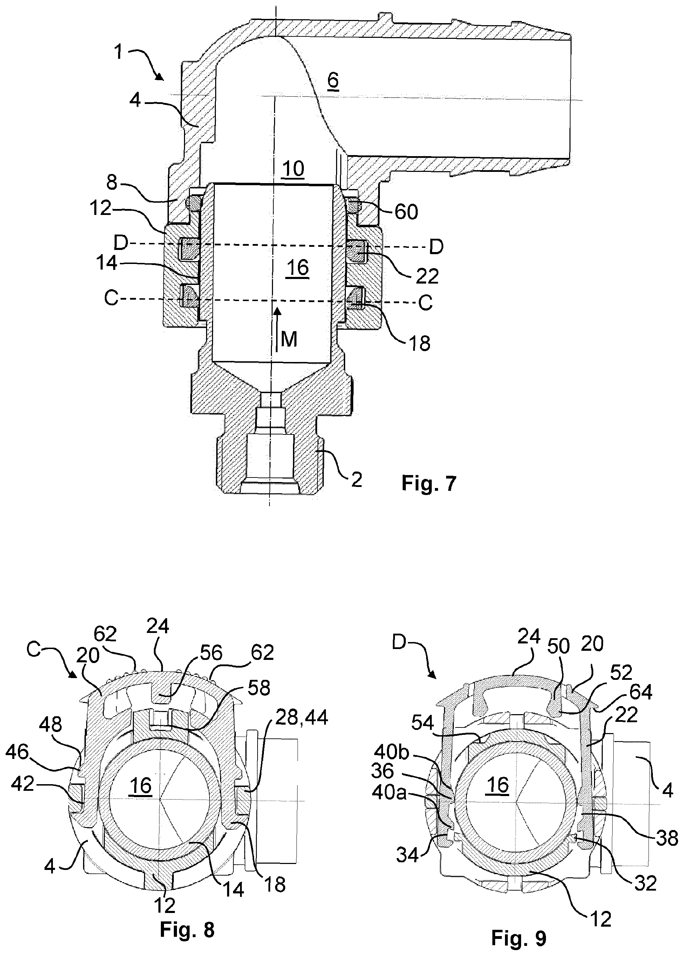

Erfindungsgemäß weist die Halteklammer 20, 120, 220 wie insbesondere in den Fig. 3, 6, 9, 12, 15, 18, 21, 24, 27, 30 und 33, 36 dargestellt, zwei radial zur Durchgangsöffnung 16, 116, 216 elastische Lagerarme 22, 122, 222 auf. Die Lagerarme 22, 122, 222 fixieren dabei den Klammerkäfig 12, 112, 212 in dem Aufnahmekanal 10, 110, 210 des Muffenabschnitts 8, 108, 208 axial zur Montagerichtung M formschlüssig und ragen gemäß der Erfindung in einem Ruhezustand der Lagerarme 22, 122, 222 in die Durchgangsöffnung 16, 116, 216 des Klammerkäfigs 12, 112, 212 hinein. Weiterhin ist es Teil der Erfindung, dass die Lagerarme 22, 122, 222, wie in den Fig. 9, 12, 27 und 30 dargestellt, radial zur Durchgangsöffnung 16, 116, 216 elastisch in einen Spannungszustand aufweitbar ausgebildet sind.

Zweckmäßig ist, während die Lagerarme 22, 122, 222 in dem Ruhezustand sind und die Halteklammer 20, 120, 220 in der Einführstellung ist, die Halteklammer 20, 120, 220 gegen die Verschiebung von der Einführstellung in die Blockierstellung blockiert. Diese Ausführung ist insbesondere in den Fig. 6, 21 und 23 dargestellt.

Vorzugsweise ist, während die Haltearme 18, 118, 218 im Spannungszustand sind und die Halteklammer 20, 120, 220 in der Einführstellung ist, die Halteklammer 20, 120, 220 wie in den Fig. 8, 23 und 26 dargestellt, gegen die Verschiebung von der Einführstellung in die Blockierstellung blockiert.

Wie in den Fig. 15 ,33 und 39 dargestellt, ist, während die Lagerarme 22, 122, 222 in dem Ruhezustand sind und die Halteklammer 20, 120, 220 in der Blockierstellung ist, die Halteklammer 20, 120, 220 gegen die Verschiebung von der Blockierstellung in die Einführstellung kraftformschlüssig blockiert.

**In** einer besonderen Ausführung der Erfindung ist die Halteklammer 20, 120, 220 wie in den Fig. 3, 18 und 36 dargestellt, U-förmig ausgebildet. Zweckmäßig sind die Lagerarme 22, 122, 222 und die Haltearme 18, 118, 218 über einen Verbindungsabschnitt 24, 124, 224 verbunden und erstrecken sich gleichgerichtet vorzugsweise von dem Verbindungsabschnitt 24, 124, 224 aus zu jeweils einem freien Ende. Insbesondere sind die Lagerarme 22, 122, 222 und die Haltearme 18, 118, 218 axial voneinander beabstandet angeordnet. Wie in den Fig. 3, 18 und 36 dargestellt, ist vorzugsweise jeweils zwischen einem Haltearm 18, 118, 218 und einem axial versetzten Lagerarm 22, 122, 222 ein Spalt ausgebildet, welcher sich jeweils von den freien Enden bis zum Verbindungsabschnitt 24, 124, 224 erstreckt.

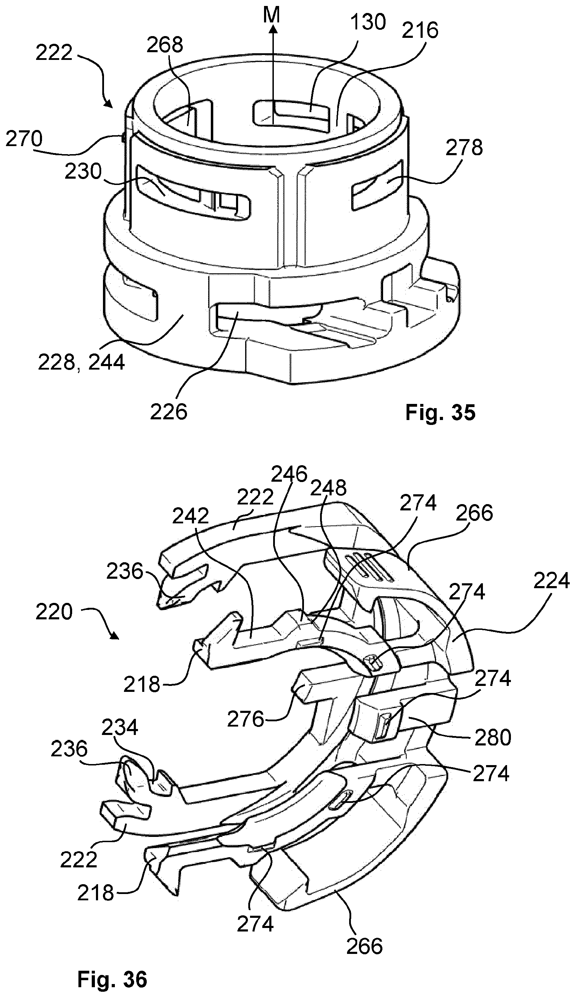

Eine vorteilhafte Variante der Halteklammer 120, 220 ist insbesondere in den Fig. 16 und 36 dargestellt. Zweckmäßig weist die Halteklammer 120, 220 auf der gegen die Montagerichtung M weisende Seite zumindest zwei an den Haltearmen 118, 218 und/oder an dem Verbindungsabschnitt 124, 224 ausgebildete Druckverriegelungshöcker 274 auf. Eine bevorzugte Variante mit zwei Druckverriegelungshöckern 174 an dem Verbindungsabschnitt 124 ist beispielhaft in Fig. 16 dargestellt. Eine erweiterte Ausführungsform, welche exemplarisch in Fig. 36 dargestellt ist, weist neben diesen beiden Druckverriegelungshöckern 274 an dem Verbindungsabschnitt 224 zusätzlich zwei Druckverriegelungshöcker 274 an den Haltearmen 220 auf. Weiterhin kann vorgesehen sein, dass an dem Verbindungsabschnitt 224 drei Druckverriegelungshöcker 274 und an den Haltearmen 218 zwei Druckverriegelungshöcker 274, wie in Fig. 36 dargestellt, angeordnet sind.

Vorteilhaft sind die Druckverriegelungshöcker 174, 274 derart gegen die Montagerichtung M weisend hervorstehend ausgebildet, dass in der Blockierstellung der Halteklammer 120, 220 die Druckverriegelungshöcker 174, 274 sich radial zur Durchgangsöffnung 116, 216 an einer inneren Umfangswandung der Durchgangsöffnung 116, 216 abstützen können.

Insbesondere sind zwei Druckverriegelungshöcker 274 an den Haltearmen 218 derart gegenüberliegend zueinander ausgebildet und angeordnet, dass die Druckverriegelungshöcker 274 in der Blockierstellung der Halteklammer 220 und dem Ruhezustand der Haltearme 218 auf einer Symmetrieachse der Durchgangsöffnung 216, welche sich insbesondere senkrecht zur Verschieberichtung der Halteklammer 220 erstreckt, innerhalb der Durchgangsöffnung 216 angeordnet sind.

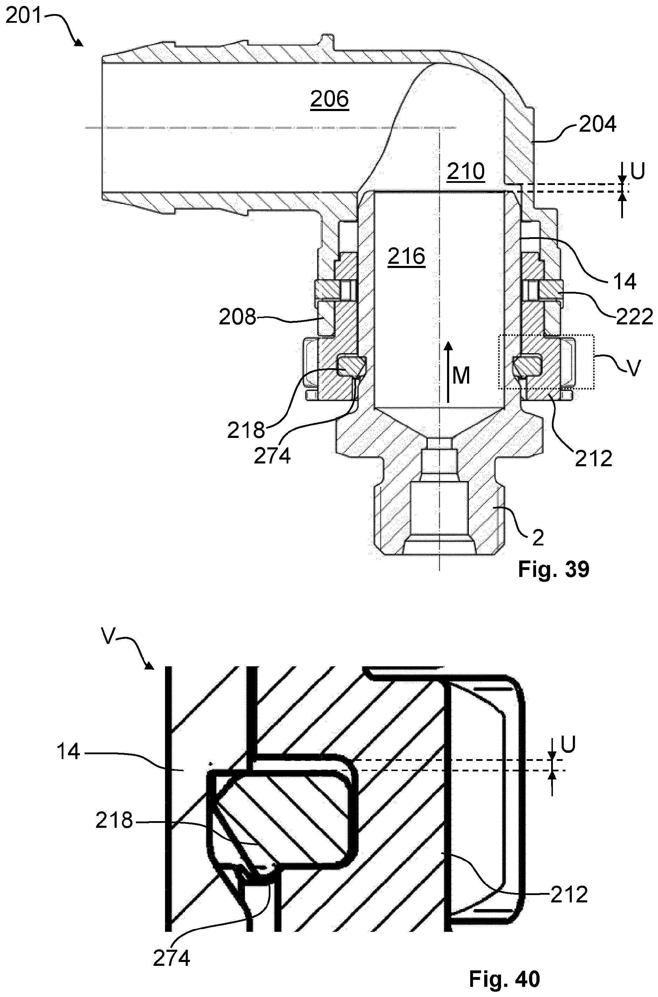

Um die radiale Verschiebung der Halteklammer 120, 220 von der Blockierstellung in die Einführstellung und/oder eine radiale Aufweitung der Haltearme 118, 218, insbesondere bei einer Systemdruckbelastung, welche im Betrieb durch das zuleitende Fluid generiert wird, zu blockieren, haben sich die Druckverriegelungshöcker 174, 274 als besonders vorteilhaft erwiesen. Insbesondere bei einem vollständig in den Steckverbinder 101, 201 eingesteckten Gegensteckverbinder 2, wird bei einer Systemdruckbelastung die Halteklammer 120, 220 derart axial gegen die Montagerichtung verschoben, dass sich die Druckverriegelungshöcker 174, 274 in einem Spalt zwischen Steckerschaft 14 und Umfangswandung der Durchgangsöffnung 116, 216 anordnen. Die Druckverriegelungshöcker 174, 274 blockieren dabei, wie in den Fig. 39 und 40 dargestellt, dass sich die Haltearme 118, 218 radial in Ihren Spannungszustand aufweiten und/oder, dass die Halteklammer 120, 220 aus der Blockierstellung in die Einführstellung überführt werden kann. Einem ungewollten Lösen der Halteklammer 120, 220 bzw. des Gegensteckverbinders 2 wird mittels der Druckverriegelungshöcker 174, 274 so entgegengewirkt.

Zweckmäßig ist die Halteklammer 220 weiterhin, wie in den Fig. 39 und 40 dargestellt, derart ausgebildet, dass bei einem vollständig eingesteckten Gegensteckverbinder 2 und unter dem Systemdruck stehend, die Halteklammer 220 mit einem an die Druckverriegelungshöcker 274 angrenzenden Bereich der gegen die Montagerichtung M weisenden Seite auf einer in Montagerichtung M weisenden Lagerfläche des Klammerkäfigs axial aufliegt und mit den Druckverriegelungshöckern 274 radial gegen eine Umfangswandung der Durchgangsöffnung 216 anliegt.

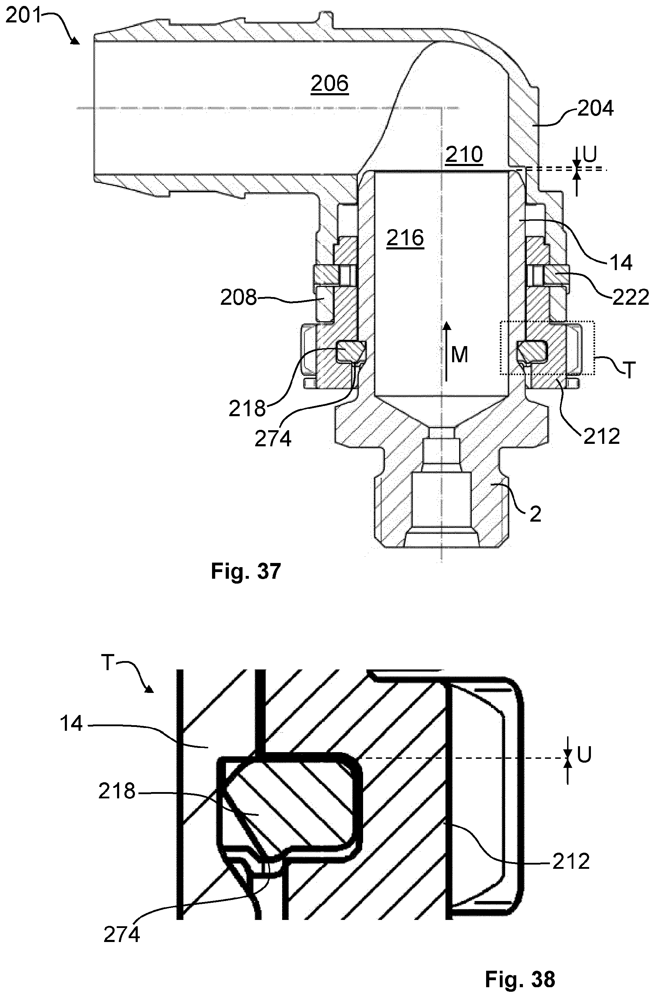

Es hat sich als zweckmäßig erwiesen, dass der Grundkörper 104, 204 bzw. der Klammerkäfig 112, 212 mit einem Übersteckweg für den Steckerschaft 14 dimensioniert ist. Der Übersteckweg U ist exemplarisch in den Fig. 37 und 39 gekennzeichnet. Weiterhin weist zweckmäßig die Halteklammer 120, 220 relativ zum Klammerkäfig 112, 212 ein axiales Spiel auf. Vorzugsweise entspricht das axiale Spiel mindestens der Erstreckung der Druckverriegelungshöcker 174, 274 in axialer Richtung.

Zum Zweck der Montage kann durch das Spiel der Halteklammer 120, 220 zum Klammerkäfig 112, 212, die Halteklammer 120, 220 von der Einführstellung in die Blockierstellung überführt werden. Wenn der Gegensteckverbinder 2 vollständig in die Durchgangsöffnung 116, 216 eingeführt und die für die Vollraststellung erforderliche Rastverbindung mit dem Gegensteckverbinder 2 mittels der Haltearme 118, 218 hergestellt ist, kann mittels einer gegen die Montagerichtung M gerichteten Rückstellkraft auf den Gegensteckverbinder 2 der Gegensteckverbinder 2 die Halteklammer 120, 220 über die Haltearme 118, 218, gegen die Montagerichtung M entsprechend seinem Übersteckweg U verschieben. **In** den Fig. 37 und 38 ist ein Zustand dargestellt, indem der Gegensteckverbinder 2 vollständig, inklusive des Übersteckwegs **U,** in den Steckverbinder eingeführt ist. Die Fig. 39 und 40 zeigen einen Zustand, nachdem die gegen die Montagerichtung M gerichteten Rückstellkraft auf den Gegensteckverbinder 2 aufgebracht wurde und der Gegensteckverbinder 2 die Halteklammer 220, axial gegen die Montagerichtung M gemäß dem Spiel zwischen der Halteklammer 220 und dem Klammerkäfig 212 verschoben hat. Die Rückstellkraft kann gezielt bei der Montage herbeigeführt oder während eines Betriebs durch einen Systemdruck herbeigeführt werden.

Vorteilhaft ordnen sich durch die axiale Verschiebung der Halteklammer 120, 220 die Druckverriegelungshöcker 174, 274, wie in den Fig. 39 und 40 dargestellt, radial neben der inneren Umfangswandung der Durchgangsöffnung 116, 216 an und blockieren die radiale Verschiebung des Halteklammer 120, 220 und das radiale Aufweiten der Haltearme 118, 218. Zum Lösen der Rastverbindung bzw. der Blockade durch die Druckverriegelungshöcker 174, 274 wird zweckmäßig der Gegensteckverbinder 2, wie in den Fig. 37 und 38 dargestellt, zumindest über die axiale Länge der Druckverriegelungshöcker 174, 274 in Montagerichtung M in eine Übersteckstellung verschoben, so dass sich die Druckverriegelungshöcker 174, 274 und die innere Umfangswandung der Durchgangsöffnung 116, 216 nicht überschneiden. Die elastische Verformung der Haltearmer 118, 218 und das radiale Verschieben der Halteklammer 120, 220 sind wieder freigegeben.

**In** einer besonderen Ausführungsform der Halteklammer 220 ist an dem Verbindungsabschnitt 224 ein radial zur Durchgangsöffnung 216 weisender Rastzapfen 280 derart ausgebildet, dass der Rastzapfen 280, wenn die Halteklammer 220 in ihrer Blockierstellung ist, in eine Haltenut eines vollständig in den Steckverbinder 101, 201 eingesteckten Gegensteckverbinders 2, eingreift und den Gegensteckverbinder 2 gegen die Montagerichtung M weisend formschlüssig blockiert. Eine derartige Ausführung der Halteklammer 220 mit einem Rastzapfen 280 ist exemplarisch in Fig. 36 dargestellt. Vorteilhaft ist an dem Rastzapfen 280 gegen die Montagerichtung M weisend zumindest ein Druckverriegelungshöcker 274 angeordnet. Insbesondere erhöht der Rastzapfen 280 die Haltekraft der Halteklammer 220 und entlastet die Rastarme 218 bei der formschlüssigen Blockierung einer Bewegung des Gegensteckverbinders 2 entgegen der Montagerichtung M.

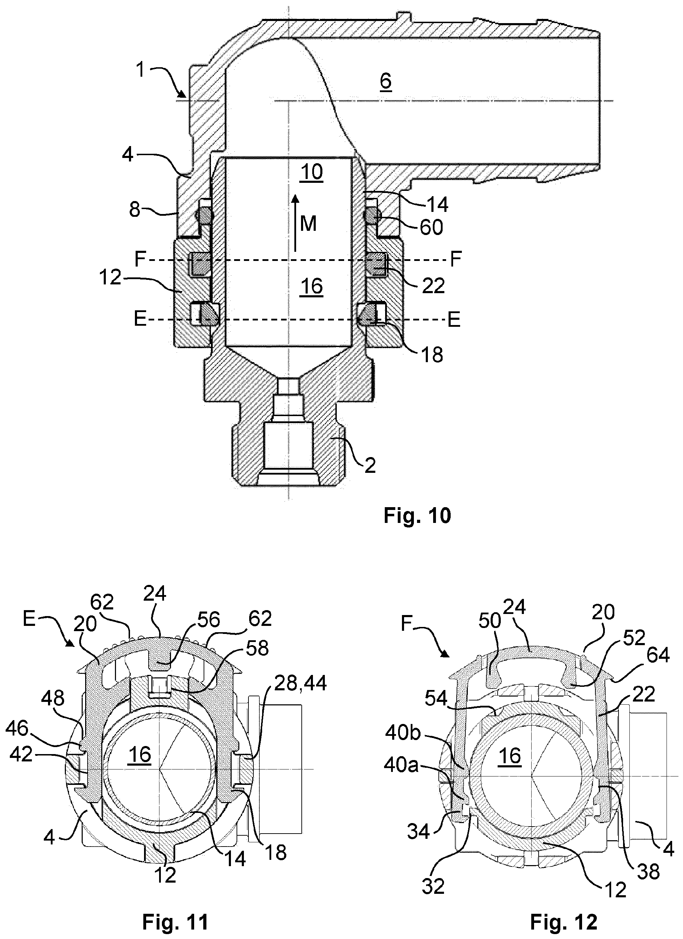

Wie in den Fig. 2, 17 und 35 dargestellt, weist der Klammerkäfig 12, 112, 212 in einer bevorzugten Variante zwei radial zur Durchgangsöffnung 16, 116, 216 geöffnete Fenster 26, 126, 226 auf. Weiterhin ist bevorzugt, dass jeweils eine sich axial zur Durchgangsöffnung 16, 116, 216 erstreckende Verstärkungsstrebe 28, 128, 218 in den Fenstern angeordnet ist. Entsprechend der zweckmäßigen Ausführung, die in den Fig. 5, 8, 11, 14, 20, 23, 26, 29 und 32 dargestellt ist, greifen die Haltearme 18, 118, 218 durch die Fenster 26, 126, 226 derart hindurch, dass die Haltearme 18, 118, 218 radial zwischen der Durchgangsöffnung 16, 116, 216 und den Verstärkungsstreben 28, 128, 228 angeordnet sind. Insbesondere ragen die Haltearme 18, 118, 218 zumindest in dem Ruhezustand in die Durchgangsöffnung 16, 116, 216 des Klammerkäfigs 12, 112, 212 hinein, wie es exemplarisch in den Fig. 11, 14, 20, 29 und 32 dargestellt ist.

Besonders vorteilhaft weist der Grundkörper 4 vier über den Umfang verteilt ausgebildete axiale Führungsschlitze 27 auf, welche insbesondere um 90° zueinander versetzt angeordnet und gegen die Montagerichtung M weisend geöffnet sind. Zweckmäßig sind die Verstärkungsstreben 28 derartig mit einem radialen Überstand zum Klammerkäfig 12 ausgebildet, dass die Verstärkungsstreben 28 zur Anordnung des Klammerkäfigs 12 in dem Aufnahmekanal 10 in die Führungsschlitze 27, eingreifen und eine Verdrehung blockieren.

Zweckmäßig sind die Verstärkungsstreben 28 derart mit einem Sockel 29 ausgebildet, dass in einem in dem Aufnahmekanal 10 montierten Zustand des Klammerkäfigs 12 die Sockel 29 einen vorteilhaften Abstand zwischen einem Bund des Klammerkäfigs 12 und einem gegen die Montagerichtung M weisenden Ende des Grundkörpers 4 gewährleisten.

Eine weitere vorteilhafte Ausführung des Steckverbinders 1, 101, 201 ist in den Fig. 6, 9, 12 15, 21, 24, 27, 30, 33 und 35 dargestellt. Gemäß dieser optionalen Ausführung weisen der Muffenabschnitt 8, 108, 208 und der Klammerkäfig 12, 112, 212 jeweils zumindest zwei, zur Montagerichtung M radiale Durchbrüche 30, 130, 230 auf. Entsprechend der dargestellten Ausführung sind vorzugsweise jeweils ein Durchbruch 30, 130, 230 des Klammerkäfigs 12, 112, 212 und des Muffenabschnitts 8, 108, 208 in einem eingesteckten Zustand des Klammerkäfigs 12, 112, 212 im Muffenabschnitt 8, 108, 208 fluchtend zueinander angeordnet. Zweckmäßig sind die Durchbrüche 30, 130, 230 derart zueinander angeordnet, dass die Halteklammer 20, 120, 220 mit den Lagerarmen 22, 122, 222 radial zur Montagerichtung M durch die Durchbrüche 30, 130, 230 des Klammerkäfigs 12, 112, 212 und des Muffenabschnitts 8, 108, 208 hindurch in die Durchgangsöffnung 16, 116, 216 des Klammerkäfigs 12, 112, 212 eingeführt werden kann.

Die Fig. 2, 17 und 35 zeigen eine bevorzugte Variante der Erfindung, gemäß welcher die radial geöffneten Fenster 26, 126, 226 zur Anordnung und Durchführung der Haltearme 18, 118, 218 axial zur Montagerichtung M von den Durchbrüchen 30, 130, 230 zur Anordnung und Durchführung der Lagerarme 22, 122, 222 beabstandet angeordnet sind. Vorzugsweise sind die Fenster 26, 126, 226 und die Durchbrüche 30, 130, 230 axial hintereinander, insbesondere ohne einen Winkelversatz, um die Durchgangsöffnung angeordnet.

Eine andere optionale Ausführung ist in den Fig. 3, 6, 9, 12, 15, 21, 24, 27, 30 und 33 dargestellt. Vorteilhaft weist der Klammerkäfig 12, 112 radial nach außen weisende Rastmittel 32, 132 auf. Insbesondere weisen die Lagerarme 22, 122, 222 zu den Rastmitteln 32, 132 korrespondierende, insbesondere radial nach innen geöffnete Lagernuten 34, 134, 234 auf. Zweckmäßig greifen die Rastmittel 32, 132 in dem Ruhezustand der Lagerarme 22, 122, 222 und der Einführstellung der Halteklammer 20, 120, 220 in die Lagernuten 34, 134, 234 ein. Vorteilhaft blockieren die Rastmittel 32, 132 im Ruhezustand der Lagerarme 22, 122, 222 eine Verschiebung der Halteklammer 20, 120, 220 von der Einführstellung in die Blockierstellung formschlüssig. Die Lagerarme 22, 122, 222 gemäß dieser Variante der Erfindung sind in den Fig. 6, 21 und 24 in einer Einführstellung der Halteklammer 20, 120 dargestellt. Insbesondere kann der in Fig. 36 dargestellten Klammerkäfig 212 und die in Fig. 35 dargestellte Halteklammer 220 entsprechend dieser Ausführung ausgebildet sein.

Zweckmäßig weisen in einer weiterentwickelten Ausführung die Lagerarme 22, 122, 222 radial nach innen weisende Spreizmittel 36, 136, 236 auf. Diese Ausführung ist insbesondere in den Fig. 3, 6, 9, 21, 24, 27, 30, 33 und 36 dargestellt. Die Spreizmittel 36, 136, 236 ragen in der Einführstellung der Halteklammer 20, 120, 220 und dem Ruhezustand der Lagerarme 22, 122, 222, wie in den Fig. 6, 21 und 24 dargestellt, derart in die Durchgangsöffnung 16, 116, 216 hinein, dass die Lagerarme 22, 122, 222 über die Spreizmittel 36, 136, 236 bei dem Einführen des Gegensteckverbinders 2 in Montagerichtung M die von dem Ruhezustand in den Spannungszustand aufweitbar sind. Die Lagerarme 22, 122 im Spannungszustand sind in den Fig. 9, 12, 27, 30 und 33 dargestellt.

Gemäß einer bevorzugten Reaktion auf die radialelastische Aufweitung der Lagerarme 22, 122, 222 in den Spannungszustand werden die Rastmittel 32, 132, wie insbesondere aus den Fig. 9, 12, 27 und 30 hervorgeht, aus den Lagernuten 34, 134, 234 gehoben. Insbesondere wird zweckmäßig dadurch die Verschiebung der Halteklammer 20, 120, 220 von der Einführstellung in die Blockierstellung freigegeben.

Eine weitere Ausführungsform der Erfindung sieht vor, dass die Lagernuten 34 in einer Erstreckungsrichtung der Lagerarme 22 hinter den Spreizmitteln angeordnet sind. Beispielsweise geht diese Anordnung aus Fig. 3 hervor. Zwischen der jeweiligen Lagernut 34 und dem jeweiligen Spreizmittel 36 ist zweckmäßig eine Positionsnut 38 ausgebildet. **In** vorteilhafter Weise ist das Rastmittel 32 des Klammerkäfigs 12 in dem Ruhezustand der Lagerarme 22 und in der Blockierstellung der Halteklammer 20 derart in der Positionsnut 38 angeordnet, dass sich insbesondere das Spreizmittel 36 auf einem Außenumfang des Gegensteckverbinders 2, insbesondere des Steckerschafts 14 kraftformschlüssig abstützt. Diese bevorzugte Anordnung des Rastmittels 32 in der Positionsnut 38 und des Spreizmittels 36 in abstützender Funktion auf dem Außenumfang des Steckerschafts 14 ist besonders vorteilhaft in Fig. 15 dargestellt. Von besonderem Vorteil erzeugt diese Ausführung, insbesondere das sich auf dem Außenumfang kraftformschlüssig abstützende Spreizmittel 36, einen Widerstand gegen eine Verschiebung der Halteklammer 20 von der Blockierstellung in die Einführstellung.

Insbesondere weisen die Lagerarme 22, wie beispielhaft in den Fig. 3, 6, 9, 12 und 15 dargestellt, jeweils zumindest eine zum freien Ende der Lagerarme 22 ansteigende Dehnungsschräge 40a, 40b auf. Zweckmäßig mündet jeweils eine Dehnungsschräge 40a oberhalb der Lagernut 34 und die Lagernut 34 schließt sich in bevorzugter Art unmittelbar an die Dehnungsschräge 40a an.

Alternativ oder ergänzend mündet eine Dehnungsschräge 40b oberhalb der Positionsnut 38. Gemäß einer ebenfalls bevorzugten Variante schließt sich die Positionsnut 38 unmittelbar an die Dehnungsschräge 40b an. Die Dehnungsschrägen 40b in unmittelbarer Nachbarschaft zu den Positionsnuten 38 sind ebenfalls in den Fig. 3, 6, 9, 12 und 15 dargestellt.

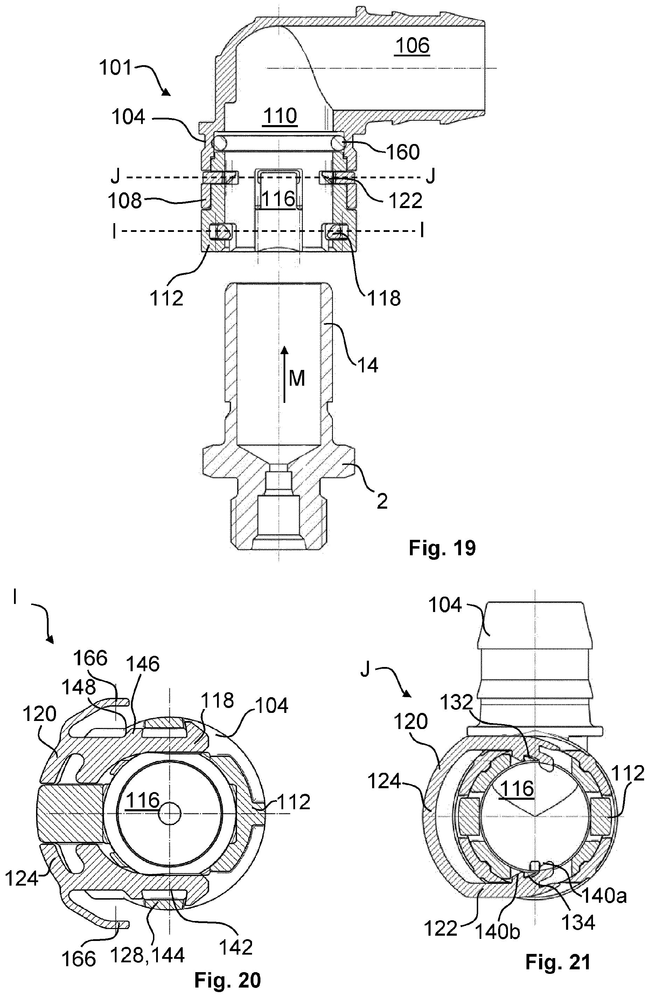

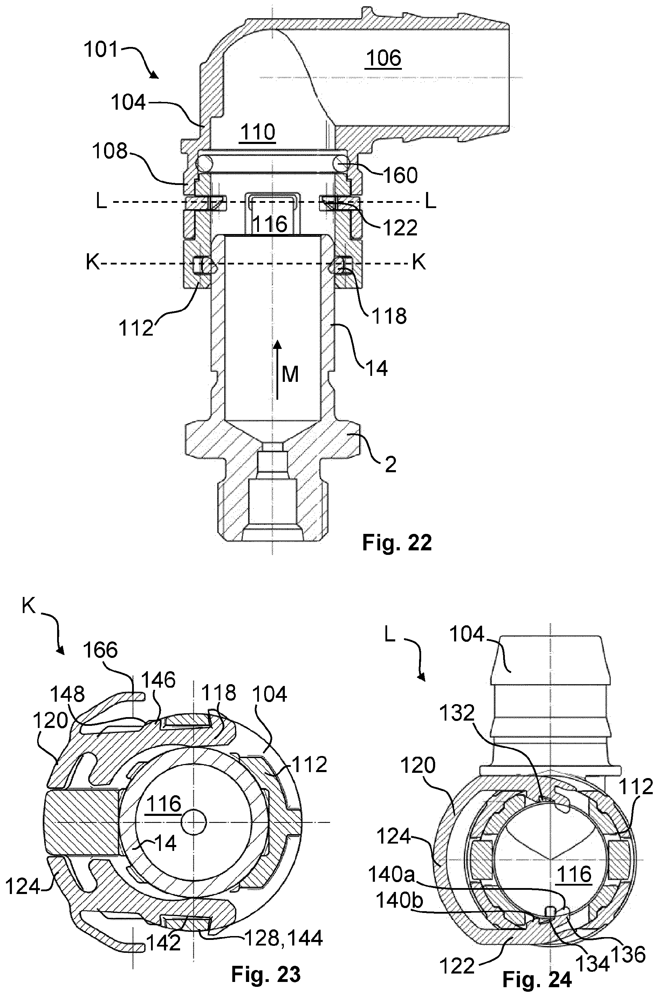

Eine alternative Ausführung sieht vor, dass die Lagernuten 134, 234 in einer Erstreckungsrichtung der Lagerarme 122, 222 vor den Spreizmitteln 136, 234 angeordnet sind. Insbesondere ist diese Ausführung in den Fig. 21, 24, 27, 30, 33 und 36 dargestellt. Zweckmäßig ist das Rastmittel 132 des Klammerkäfigs 112, 212 in dem Ruhezustand der Lagerarme 122, 222 und in der Einführstellung der Halteklammer 120, 220, wie in den Fig. 21 und 24 dargestellt, derart in der Lagernut 134, 234 angeordnet, dass ein Widerstand gegen eine Verschiebung der Halteklammer 120, 220 von der Einführstellung in die Blockierstellung erzeugt ist. Besonders vorteilhaft weisen die Lagerarme 122, 222 vorzugsweise jeweils zumindest eine zum freien Ende der Lagerarme 122, 222 ansteigende Dehnungsschräge 140a, 140b auf. Exemplarisch ist diese Ausführung in den Fig. 21, 24, 27, 30 und 33 dargestellt. Insbesondere mündet jeweils eine Dehnungsschräge 140a oberhalb der Lagernut 134, 234 und die Lagernut 134, 234 schließt sich unmittelbar der Dehnungsschräge 140a an. Ergänzend oder alternativ ist jeweils eine Dehnungsschräge 140b an den Spreizmitteln 136, 236 ausgebildet, wobei insbesondere in dem Ruhezustand der Lagerarme 122, 222 und der Blockierstellung der Halteklammer 120, 220, dargestellt in Fig. 33, sich das Spreizmittel 136, 236 auf einem Außenumfang des Gegensteckverbinders 2 kraftformschlüssig abstützen kann. Vorteilhaft ist dadurch ein Widerstand gegen eine Verschiebung der Halteklammer 120, 220 von der Blockierstellung in die Einführstellung erzeugt. Insbesondere kann der in Fig. 36 dargestellten Klammerkäfig 12 und die in Fig. 35 dargestellte Halteklammer 220 entsprechend dieser Ausführung ausgebildet sein.

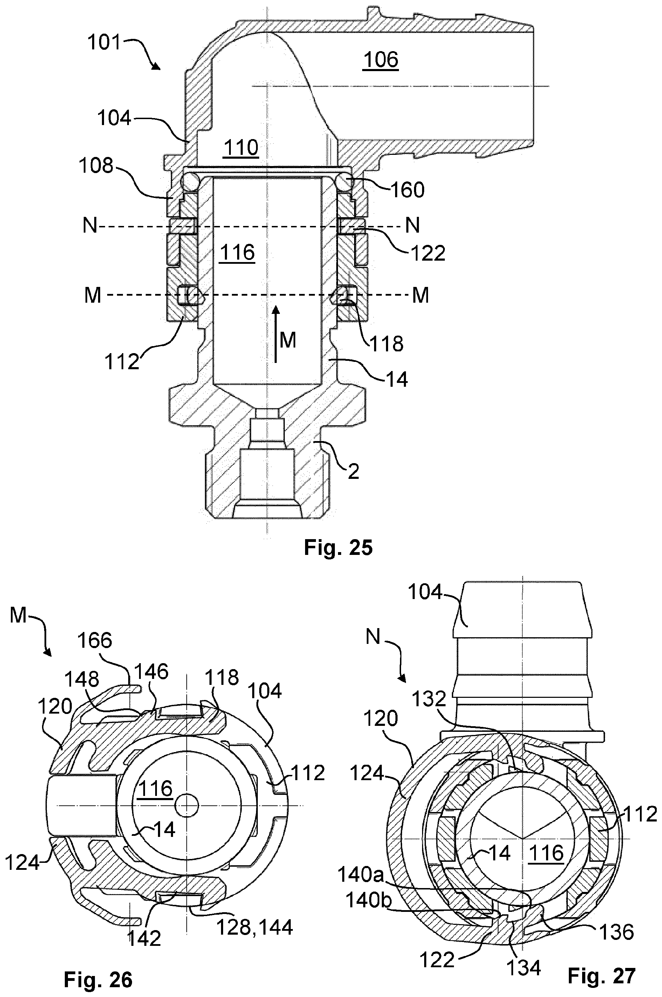

Zweckmäßig sind die Lagerarme 122, 222 derart ausgebildet, dass die Spreizmittel 136, 236 der Lagerarme 122, 222, wie beispielhaft in den Fig. 21, 24, 27, 30 und 33 dargestellt, zumindest in der Einführstellung der Halteklammer 120, 220 jeweils in Richtung zu den freien Enden der Lagerarme 122, 222 weisend hinter einer Mittelachse der Durchgangsöffnung 116, 216 angeordnet sind. Insbesondere wenn, wie in den Fig. 27, 30 und 33 dargestellt, der Gegensteckverbinder 2 in die Durchgangsöffnung 116, 216 eingeführt wird, stützen sich die Spreizmittel 136, 236 derart auf dem Steckerschaft 14 des Gegensteckverbinders 2 ab, dass der Steckerschaft 14 von den Lagerarmen 122, 222 hintergriffen wird. Durch die aus der radialelastischen Verformung resultierende Rückstellkraft drücken die Spreizmittel 136, 236 auf den Steckerschaft 14 und erzeugen eine Verschiebekraft, welche den Verbindungsabschnitt 124, 224 der Halteklammer 120, 220 in Richtung der Mittelachse drängt. Insbesondere hat die resultierende Verschiebekraft die Wirkung, dass die Halteklammer 120, 220 selbstständig von der Einführstellung in die Blockierstellung überführt wird, sobald der Steckerschaft 14 vollständig in der Durchgangsöffnung 116, 216 angeordnet ist und die Haltearme 118, 218 im Ruhezustand in die Rastnut des Gegensteckverbinders 2 hineinragen. Insbesondere kann der in Fig. 36 dargestellten Klammerkäfig 212 und die in Fig. 35 dargestellte Halteklammer 220 entsprechend dieser Ausführung ausgebildet sein.

Weiterhin ist es vorteilhaft für die Montage und Betriebssicherheit, wenn die Haltearme 18, 118, 218 jeweils eine radial nach außen geöffnete Haltenut 42, 142, 242 ausgebildet haben. Die Haltenut 42, 142, 242 ist vorzugsweise derart korrespondierend zu einem Blockiermittel 44, 144, 244 des Klammerkäfigs 12, 112, 212 ausgebildet, dass in dem Spannungszustand der Haltearme 18, 118, 218 und in der Einführstellung der Halteklammer 20, 120, 220 das Blockiermittel 44, 144, 244 in der Haltenut 42, 142, 242 angeordnet ist. Die Haltenut 42, 142 und das Blockiermittel 44, 144 sind in unterschiedlichen Stellungen zueinander in den Fig. 5, 8, 11, 14, 20, 23, 26, 29 und 32 dargestellt, wobei insbesondere die Fig. 5, 8, 23 und 26 darstellen, wie das Blockiermittel 44, 144 in der Haltenut 42, 142 angeordnet ist und insbesondere eine blockierende Funktion gegen ein Verschieben der Halteklammer 20, 120 von der Einführstellung in die Blockierstellung erfüllt. Diesbezüglich ist das Blockiermittel 44, 144, 244 wenn die Haltearme 18, 118, 218 im Spannungszustand sind und die Halteklammer 20, 120, 220 in Einführstellung ist, zweckmäßig derart in der Haltenut 42, 142, 242 angeordnet, dass eine Verschiebung der Halteklammer 20, 120, 220 von der Einführstellung in die Blockierstellung blockiert ist.

**In** einer optionalen Variante der Erfindung ist es beabsichtigt, dass eine erste Nutwand der Haltenut 42, 142, 242 von einem radial vom Haltearm 18, 118, 118 nach außen abstehenden Lagerelement 46, 146, 246 zum freien Ende des Haltearms 18, 118, 228 weisend ausgebildet ist. Vorteilhaft ist diese Variante in den Fig. 3, 5, 8, 11, 14, 18, 20, 23, 26, 29, 32 und 36 dargestellt.

Insbesondere in dem Ruhezustand des Haltearms 18, 118, 218 und der Blockierstellung der Halteklammer 20, 120, 220, wie in den Fig. 14 und 32 dargestellt, liegt das Lagerelement 46, 146, 246 radial zu der Durchgangsöffnung 16, 116, 216 nach außen weisend an dem Blockiermittel 44, 144, 244 derart an, dass zweckmäßig eine radiale Dehnung der Haltearme 18, 118, 218 und eine Überführung der Haltearme 18, 118, 218 von dem Ruhezustand in den Spannungszustand blockiert ist.

**In** den Fig. 3, 5, 8, 11, 14, 18, 20, 23, 26, 29 32 und 36 ist zudem eine Weiterentwicklung des Lagerelements 46, 146, 246 dargestellt, gemäß welcher das Lagerelement 46, 146, 246 als Rampenelement ausgebildet ist. Das Rampenelement weist eine zum freien Ende des jeweiligen Haltearms 18, 118, 218 ansteigende Schrägfläche 48, 148, 248 auf, welche fertigungstechnische Vorteile aufweist.

Eine besondere Kombination von Merkmalen ist in den Fig. 5, 8, 11, 14, 20, 23, 26, 29, 32 und 35 dargestellt und sieht vor, dass die Verstärkungsstreben 28, 128, 228 als Blockiermittel 44, 144, 244 dienen. Insbesondere wird mittels dieser Ausführung synergetisch die Montage- und Betriebssicherheit verbessert sowie die Steifigkeit des Klammerkäfigs 12, 112, 212 erhöht, was ebenfalls zur (Leckage-)Sicherheit beiträgt. **In** vorgenannter vorteilhafter Art sind die als Blockiermittel 44, 144, 244 ausgebildeten Verstärkungsstreben 28, 128, 228 in dem Ruhezustand der Haltearme 18, 118, 215 und in der Einführstellung der Halteklammer 20, 120, 220 in den Haltenuten 42, 142, 242 angeordnet.

Eine weitere besondere Ausführung ist in den Fig. 3, 6, 9, 12 und 15 dargestellt. Dabei weist die Halteklammer 20 zumindest einen, insbesondere zwei, Stützarme 50 auf. Die dargestellten Ausführungen weisen jeweils zwei Stützarme 50 auf. Der bzw. die Stützarme 50 sind vorzugsweise zwischen den Lagerarmen 22 angeordnet und sind insbesondere sich parallel zu den Lagerarmen 22 zu einem Stützkopf 52 erstreckend ausgebildet. Es hat sich als vorteilhaft herausgestellt, dass gemäß einer angepassten Ausführung in der Blockierstellung der Halteklammer 20 der jeweilige Stützkopf 52 in jeweils einer korrespondierend ausgebildeten Kopfaufnahme 54 im Außenumfang des Klammerkäfigs 12 angeordnet ist. Besonders vorteilhaft ist in Fig. 15 dargestellt, wie in der Blockierstellung der Halteklammer 20 die zwei ausgebildeten Stützarme 50 sich mit ihren Stützköpfen 52 in korrespondierend ausgebildeten Kopfaufnahmen 54 abstützen. Der Steckverbinder 101, 202 entsprechend der in den Fig. 16 bis 40 dargestellten Variante kann in einer bevorzugten Entwicklung ebenfalls die Merkmale dieser Ausführung aufweisen.

Zweckmäßig weist die Halteklammer 20 alternativ oder ergänzend zu einer der vorgenannten Ausführungen zumindest einen Führungsstift 56 auf. Der Führungsstift 56 ist besonders vorteilhaft in den Fig. 3, 5, 8, 11 und 12 dargestellt. Wie dargestellt, ist der Führungsstift 56 vorzugsweise zwischen den Haltearmen 18 angeordnet und zweckmäßig sich parallel zu den Haltearmen 18 zu einem Auflageende erstreckend ausgebildet. Als vorteilhaft für die Montagesicherheit hat sich gezeigt, dass der Führungsstift 56 in der Blockierstellung der Halteklammer 20 mit seinem Auflageende an einem Außenumfang des Klammerkäfigs 12 anliegt. Ebenfalls ist diese Ausführung mit dem Steckverbinder 101, 201 entsprechend den in den Fig. 16 bis 40 dargestellten Ausführung, kombinierbar.

Gemäß einer Weiterentwicklung der Erfindung, welche insbesondere aus Fig. 14 hervorgeht, weist der Klammerkäfig 12 einen korrespondierend zum Führungsstift 56 ausgebildeten Führungskanal 58 auf. Der Führungsstift 56 greift vorzugsweise zumindest in der Blockierstellung der Halteklammer 20 radial zur Durchgangsöffnung 16 in den Führungskanal 58 ein. Ebenfalls ist diese Ausführung mit dem Steckverbinder 101, 202, entsprechend der in den Fig. 16 bis 40 dargestellten Ausführung, kombinierbar.

Zweckmäßig erstreckt sich der Führungskanal 58 durch zwei Lagersockel 59 hindurch. Insbesondere sind die Lagersockel 59 in Fig. 2 dargestellt. Die Lagersockel 59 sind vorzugsweise derart ausgebildet, dass in dem in dem Aufnahmekanal 10 montierten Zustand des Klammerkäfigs 12, die Lagersockel 59 einen vorteilhaften Abstand zwischen dem Bund des Klammerkäfigs 12 und dem gegen die Montagerichtung M weisenden Ende des Grundkörpers 4 gewährleisten. Ebenfalls ist diese Ausführung mit dem Steckverbinder 101, 202, entsprechend der in den Fig. 16 bis 40 dargestellten Ausführung, kombinierbar.

Besonders vorteilhaft ist, wie in den Fig. 4, 7, 10, 13, 19, 22, 25, 28, 31 und 34 abgebildet, in dem Aufnahmekanal 10, 110 mindestens ein Dichtungselement 60, 160, insbesondere ein O-Ring, angeordnet. Vorzugsweise sind gemäß einer nicht dargestellten Ausführung zwei Dichtungselemente 60, 160 in dem Aufnahmekanal 10, 110 angeordnet. Insbesondere kann der in den Fig. 37 und 39 dargestellte Steckverbinder 201 entsprechend dieser Ausführung ausgebildet sein.

Das Dichtungselement 60, 160 ist zweckmäßig zwischen einer in Montagerichtung M weisenden Seitenwand des Klammerkäfigs 12, 12 und einer gegen die Montagerichtung M weisenden und sich senkrecht von einer Innenwandung des Aufnahmekanals 10, 110 umlaufend erstreckenden Stufenfläche angeordnet.

Besonders vorteilhaft dient das Dichtungselement 60, 160 einer umfangsgemäßen Abdichtung des Steckerschafts 14 gegenüber dem Muffenabschnitt 8, 108 bzw. der Innenwandung des Aufnahmekanals 10, 110.

Als besonders vorteilhaft hat sich eine, nicht dargestellte, dreiteilige Dichtung erwiesen. Die Dichtung weist demnach vorteilhaft zwei Dichtungselemente 60, 160, insbesondere O-Ringe, auf, welche mit einem Distanzring voneinander getrennt sind. Dieser dreiteilige Verbund wird zweckmäßig entsprechend der zuvor genannten Art in dem Aufnahmekanal 10, 110 montiert.

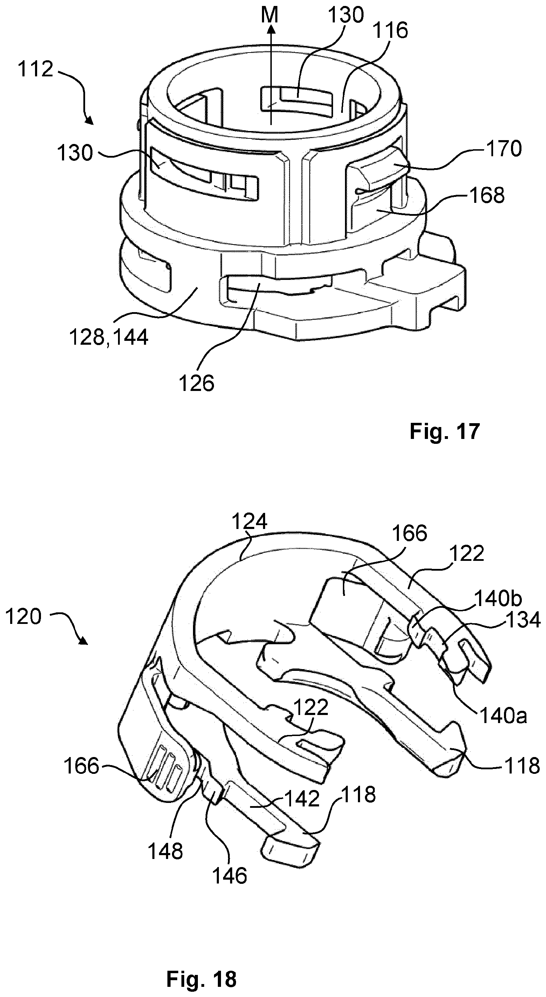

Gemäß einer bevorzugten Ausführung der Erfindung, die insbesondere in den Fig. 18, 20, 23, 26, 29, 32 und 36 dargestellt ist, weist die Halteklammer 120, 220 zumindest einen, insbesondere zwei, sich gegenüberliegende, radialelastische Greifarme 166, 266 auf. Die Greifarme 166, 266 erstrecken sich von einem an den Verbindungsabschnitt 124, 224 und/oder den Haltearmen 118, 218 angeformten Abschnitt aus weisend in Richtung zu den freien Enden der Haltearme 118, 218. Zweckmäßig sind die Greifarme 166, 266 jeweils mit einem Endabschnitt radial von den Haltearmen 118, 218 beabstandet, insbesondere so, dass die Greifarme 166, 266 mit einer radial auf den Endabschnitt wirkenden Kraft zu den Haltearmen 118, 218 hin elastisch verformt werden können. Die Greifarme 166, 266 verbessern dabei eine Griffigkeit der Halteklammer 120, 220, was insbesondere für die Überführung der Halteklammer 120, 220 von der Blockierstellung in die Einführstellung vorteilhaft ist. Die Ausführung der Erfindung mit den Greifarmen 166, 266 ist zweckmäßig ebenfalls mit dem in den Fig. 1 bis 15 dargestellten Ausführungsbeispiel des Steckverbinders 1 kombinierbar.

Insbesondere ist der Klammerkäfig 112, 212 formschlüssig mittels zumindest einem radialelastischen Rastarm 168, 268 mit einem radial nach außen hervorstehenden Rastfortsatz 170, 270, welcher im eingesteckten Zustand in eine Ausnehmung 172 in einer Umfangswand des Muffenabschnitts 108, 208 formschlüssig rastend eingreift, gehalten. Diese Ausführung des Klammerkäfigs 112, 212 ist insbesondere in den Fig. 17 und 35 dargestellt. Zweckmäßig ist dabei der Rastarm 168, 268 am äußeren Umfang des Klammerkäfigs 112, 212 angeformt.

Insbesondere ist in einer bevorzugten Variante der Erfindung der Klammerkäfig 112 formschlüssig mittels zumindest zwei radialelastischer Rastarme 168 mit radial nach außen hervorstehenden Rastfortsätzen 170, die im eingesteckten Zustand in Ausnehmungen 172 in einer Umfangswand des Muffenabschnitts 108 formschlüssig rastend eingreifen, gehalten. Diese Ausführung entspricht der in Fig. 17 dargestellten Ausführungsvariante des Klammerkäfigs 112. Ein dafür angepasster Steckverbinder 101 ist exemplarisch in Fig. 1 dargestellt, wobei diese Ausführung der Erfindung zweckmäßig ebenfalls mit dem in den Fig. 1 bis 15 dargestellten Ausführungsbeispiel des Steckverbinders 1 kombinierbar ist. Insbesondere sind die Rastarme 168 am äußeren Umfang des Klammerkäfigs 112 angeformt.

Eine weitere vorteilhafte Ausführung zur Anordnung des Klammerkäfigs 212 in dem Muffenabschnitt 208 sieht vor, dass die Halteklammer 220 zwischen den Lagerarmen 222 zumindest ein radial zur Durchgangsöffnung 216 hervorstehenden Zapfen 276 aufweist, wobei der Muffenabschnitt 208 und der Klammerkäfig 212 jeweils zumindest eine, zur Montagerichtung M radiale, Durchführungsöffnung aufweisen. Diese Ausführungen des Klammerkäfigs 212 und der Halteklammer 220 sind insbesondere in den Fig. 35 und 36 dargestellt. Vorteilhaft sind jeweils eine Durchführungsöffnung des Klammerkäfigs 212 und des Muffenabschnitts 208 in einem eingesteckten Zustand des Klammerkäfigs 212 im Muffenabschnitt 208 fluchtend zueinander angeordnet, insbesondere derart, dass die Halteklammer 220 mit dem Zapfen 276 radial zur Montagerichtung M durch die Durchführungsöffnung des Klammerkäfigs 212 und des Muffenabschnitts 208 hindurch eingeführt werden kann. Eine besondere Ausführung des Zapfens 276 ist in Fig. 36 dargestellt. Diese Ausführung sieht vor, dass der Rastzapfen 280 axial zur Montagerichtung versetzt zu dem Zapfen 276 angeordnet ist.

Eine zweckmäßige Variante sieht vor, dass radial zur Durchgangsöffnung 216 gegenüberliegend der Durchführungsöffnung der Klammerkäfig 212, wie in Fig. 35 dargestellt, den radialelastischen Rastarm 268 mit dem radial nach außen hervorstehenden Rastfortsatz 270 am äußeren Umfang angeformt hat, welcher im eingesteckten Zustand in die Ausnehmung in der Umfangswand des Muffenabschnitts 208 formschlüssig rastend eingreift.

Nachfolgend wird anhand der in den Fig. 4 bis 15 und 19 bis 34 dargestellten vorteilhaften Ausführungen das Einstecken und Montieren eines Gegensteckverbinders 2 veranschaulicht. Da sich der Einsteck- und Montagevorgang der in den Fig. 35 bis 40 dargestellten Varianten des Klammerkäfigs 212 und der Halteklammer 220 des Steckverbinders 201 nicht von dem Einsteck- und Montagevorgang gemäß den Fig. 19 bis 34 unterscheidet wird auf eine gesonderte Darstellung verzichtet.

Die Fig. 19 bis 21 zeigen den Steckverbinder 101 mit einem unmontierten Gegensteckverbinder 2 und der Halteklammer 20 in Einführstellung. Sowohl die Haltearme 118 als auch die Lagerarme 122 sind dabei jeweils in ihrem Ruhezustand. Insbesondere blockieren die Lagerarme 122 im Zusammenwirken mit den Rastmitteln 132 des Klammerkäfigs 112 eine Verschiebung der Halteklammer 120 von der Einführstellung in die Blockierstellung. Gleichzeitig ist die Halteklammer 120 gegen ein Herausfallen aus dem Grundkörper 104 und/oder dem Klammerkäfig 112 gesichert. Ebenfalls liegen die Zustände auch bei einem Steckverbinder 1, entsprechend der in den Fig. 16 bis 34 dargestellten Ausführung, mit einem unmontierten Gegensteckverbinder 2 vor.

Die Fig. 4 bis 6 und 22 bis 24 zeigen den Steckverbinder 1, 101 mit einem teilweise in Montagerichtung M eingesteckten Gegensteckverbinder 2 und der Halteklammer 20, 120 in Einführstellung. Bei einem Einsteckvorgang wird der Gegensteckverbinder 2 mit seinem Steckerschaft 14 in Montagerichtung M in die Durchgangsöffnung 16, 116 gesteckt. Dabei passiert der Steckerschaft 14 in der Durchgangsöffnung 16, 116 einen Abschnitt, in dem die Haltearme 18, 118 in die Durchgangsöffnung 16, 116 ragen, wie die Fig. 4 bis 6 und 22 bis 24 veranschaulichen. Zweckmäßig sind der Steckerschaft 14 und die Haltearme 18, 118 derart zueinander korrespondierend ausgebildet, dass der Steckerschaft 14 eine radial zur Montagerichtung M nach außen auf die Haltearme 18, 118 wirkende Kraft ausübt. Hilfsweise kann eine gegen die Montagerichtung M weisende Seite eine in Einsteckrichtung ansteigende Einführschräge zum besseren Einführen des Steckerschafts 14 aufweisen. **In** Folge der nach außen wirkenden Kraft werden die Haltearme 18, 118 und die Lagerarme 22, 122 jeweils radial nach außen aus dem Ruhezustand in den Spannungszustand elastisch verformt.

Die Fig. 5 und 23 zeigen, dass in diesem Zustand die Haltearme 18, 118 im Spannungszustand sind. Dabei sind zweckmäßige Blockiermittel 44, 144 in Haltenuten 42, 142 der Haltearme 18, 118 angeordnet und verhindern, dass die Halteklammer 20, 120 von der Einführstellung in die Blockierstellung überführt wird. Die Fig. 6 und 24 zeigen, dass in diesem Zustand die Lagerarme 22, 122 im Ruhezustand sind. Weiterhin sind vorteilhafte Rastmittel 32, 132 des Klammerkäfigs 12, 112 in Lagernuten 34, 134 der Lagerarme 22, 122 angeordnet und verhindern ebenfalls, dass die Halteklammer 20, 120 von der Einführstellung in die Blockierstellung überführt wird, und gleichzeitig wird sichergestellt, dass die Halteklammer nicht aus dem Grundkörper 4, 104 und/oder dem Klammerkäfig 12, 112 herausfällt.

**In** den Fig. 7 bis 9 und 25 bis 27 ist der Gegensteckverbinder 2 weiter in die Montagerichtung M in die Durchgangsöffnung 16, 116 des Klammerkäfigs 12, 112 verschoben und hat einen Abschnitt passiert, in dem die Lagerarme 22, 122 in die Durchgangsöffnung 16, 116 ragen. Die Halteklammer 20, 120 ist dabei weiterhin in der Einführstellung. Die Fig. 8 und 26 zeigen, dass die Haltearme 18, 118 weiterhin unverändert in dem Spannungszustand sind. **In** den Fig. 9 und 27 ist dargestellt, dass zu diesem Montagezeitpunkt der Steckerschaft 14 eine radial zur Montagerichtung M nach außen auf die Lagerarme 22, 122 wirkende Kraft ausübt. Infolge der nach außen wirkenden Kraft werden die Lagerarme 22, 122 radial nach außen aus dem Ruhezustand in den Spannungszustand elastisch verformt. Insbesondere wird die elastische Verformung durch die in den Durchgangskanal 6, 106 ragenden Spreizmittel 36, 136 begünstigt. Aufgrund der elastischen Verformung sind die Rastmittel 32, 32 am Klammerkäfig 12, 112 aus den Lagernuten 34, 134 herausgehoben, so dass seitens der Lagerarme 22, 122 die radiale Blockierung der Halteklammer 20, 120 aufgehoben ist.

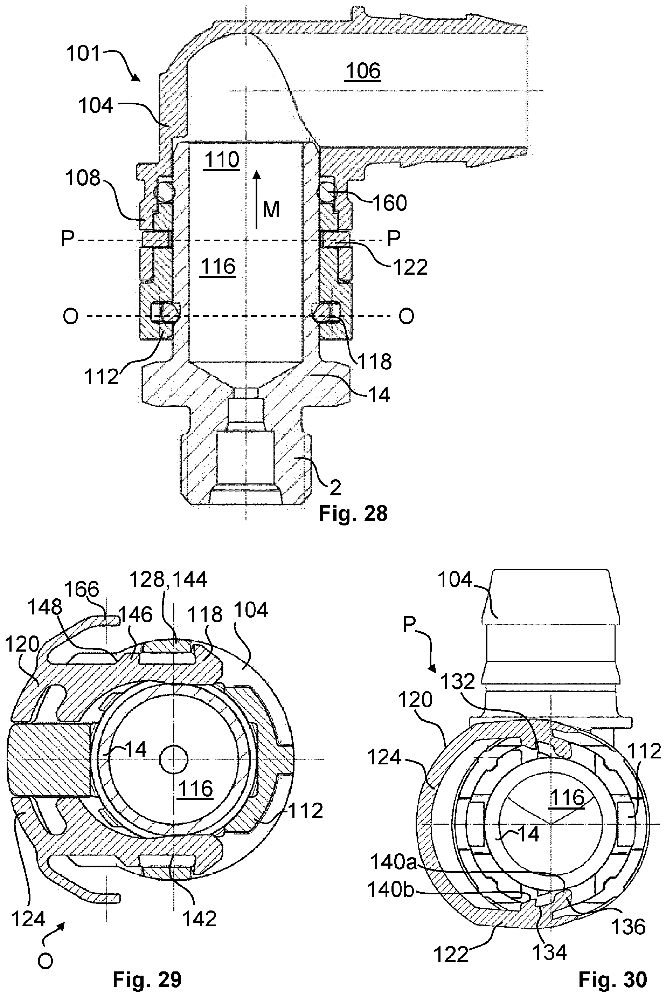

**In** den Fig. 10 bis 12 und 28 bis 30 ist der Gegensteckverbinder 2 noch weiter in die Montagerichtung M in die Durchgangsöffnung 16, 116 des Klammerkäfigs 12, 112 verschoben und hat seine Endlage erreicht. Die Halteklammer 20, 120 ist weiterhin in der Einführstellung dargestellt. **In** der Endlage des Gegensteckverbinders 2 ist die hinter dem Steckerschaft 14 angeordnete Rastnut benachbart zu den Haltearmen 18, 118 der Halteklammer 20, 120 angeordnet. Wie in den Fig. 11 und 29 dargestellt, entspannen sich die Haltearme 18, 118 in die Rastnut derart, dass der Gegensteckverbinder 2 formschlüssig axial zur Montagerichtung M mittels der Haltearme 18, 118 blockiert ist und die Blockierung zwischen Blockiermittel 44, 144 und Haltenut 42, 142 aufgehoben ist. Entsprechend der Darstellung in den Fig. 12 und 30 sind die Lagerarme 22, 122 weiterhin in dem Spannungszustand mit einer ebenfalls aufgehobenen Blockierung zwischen Rastmittel 32, 132 und Lagernut 34, 134. Insbesondere ist in diesem Montagezustand die Halteklammer 20, 120 aus der Einführstellung in die Blockierstellung überführbar.

In den Fig. 13 bis 15 und 31 bis 34 ist der Gegensteckverbinder 2 unverändert zu dem in den Fig. 10 bis 12 und 28 bis 30 dargestellten Montagezustand vollständig in die Montagerichtung M in die Durchgangsöffnung 16, 116 des Klammerkäfigs 12, 112 eingesteckt. Wie die Fig. 14 , 15, 32 und 33 zeigen, ist dabei die Halteklammer 20, 120 vorteilhaft in der Blockierstellung. Die Fig. 14 und 29 zeigen, dass die Haltearme 18, 118 weiterhin im Ruhezustand sind, allerdings durch die Verschiebung der Halteklammer 20, 120 in die Blockierstellung die Haltearme 18, 118 mit Lagerelementen 46, 146 an den Blockiermittel 44, 144 derart anliegen, dass eine radiale Verformung der Haltearme 18, 118 blockiert ist. Entsprechend den Fig. 15 und 33 sind die Lagerarme 22, 122 ebenfalls in dem Ruhezustand, wobei insbesondere in der vorteilhaften, in Fig. 15 dargestellten, Ausführung, die Rastmittel 32 des Klammerkäfigs 12 in den Positionsnuten 38 der Lagerarme 22 angeordnet sind.

Weiterhin liegen, wie in den Fig. 15 und 33 dargestellt, die Lagerarme 22, 122 mit ihren Spreizmitteln 36, 136 an dem Außenumfang des Steckerschafts 14 an, was zusätzliche Lagesicherheit erzeugt. Weiterhin wirkt eine bevorzugte Dehnungsschräge 40a, 40b derart auf das Rastmittel 32, 132 bzw. den Außenumfang des Steckerschafts 14 ein, dass ein Widerstand erzeugt wird, welcher gegen die Überführung der Halteklammer 20, 120 von der Blockierstellung in die Einführstellung wirkt.

Zweckmäßig weist die Halteklammer 20, wie in Fig. 3 dargestellt, in einer bevorzugten Ausführungsform eine Oberflächenstruktur 62 auf dem Verbindungsabschnitt 24 auf. Diese Oberflächenstruktur 62 ist insbesondere vorteilhaft, um händisch eine Druckkraft zur Überführung der Halteklammer 20 in die Montagestellung auf die Halteklammer 20 aufzubringen. Ebenfalls ist diese Ausführung mit dem Steckverbinder 101, entsprechend der in den Fig. 16 bis 34 dargestellten Ausführung, kombinierbar.

Um den Gegensteckverbinder 2 aus der Durchgangsöffnung 16, 116 entgegen der Montagerichtung M entnehmen zu können, muss die Halteklammer 20, 120 gegen den von den Dehnungsschrägen 40a, 40b, 140a, 140b erzeugten Widerstand in Richtung der Einführstellung verschoben werden. Durch das Zusammenwirken von Rastmittel 32, 132 und Dehnungsschrägen 40a, 140a bzw. das Zusammenwirken der Dehnungsschrägen 40b, 140b mit dem Außenumfang des Steckerschafts 14 werden die Lagerarme 22, 122 elastisch geweitet.

Um die Halteklammer 20, 120 in die Einführstellung zu verschieben, hat es sich als vorteilhaft erwiesen, wenn eine radial nach außen wirkende Zugkraft auf den Verbindungsabschnitt 24, 124 der Halteklammer 20, 120 aufgebracht wird. Entsprechend Fig. 3 kann die Halteklammer 20 zu diesem Zweck am Verbindungsabschnitt 24 eine Angriffskontur 64 aufweisen, mittels welcher die Halteklammer 20 besonders vorteilhaft radial nach außen gehebelt werden kann. Ergänzend oder alternativ kann die Halteklammer 20, 120 zumindest einen, exemplarisch in Fig. 18 dargestellten, Greifarm 166 aufweisen.

Sobald die Halteklammer 20, 120 wieder in der Einführstellung angeordnet ist, kann der Steckerschaft 14 entgegen der Montagerichtung M aus der Durchgangsöffnung 16, 116 gezogen werden, wobei aufgrund des synergetischen Zusammenwirkens von den Haltearmen 18, 118 und dem Steckerschaft 14 des Gegensteckverbinders 2 die Haltearme 18, 118 wieder in den Spannungszustand aufgeweitet werden.

### Bezugszeichenliste

- 1, 101, 201: Steckverbinder
- 2: Gegensteckverbinder
- 4, 104, 204: Grundkörper
- 6, 106, 206: Durchgangskanal
- 8, 108, 208: Muffenabschnitt
- 10, 110, 210: Aufnahmekanal
- 12, 112, 212: Klammerkäfig
- 14: Steckerschaft
- 16, 116, 216: Durchgangsöffnung
- 18, 118, 218: Haltearm
- 20, 120, 220: Halteklammer
- 22, 122, 222: Lagerarm
- 24, 124, 224: Verbindungsabschnitt
- 26, 126, 226: Fenster
- 27: Führungsschlitz
- 28, 128, 228: Verstärkungsstrebe
- 29: Sockel
- 30, 130, 230: Durchbruch
- 32, 132: Rastmittel
- 34, 134, 234: Lagernut
- 36, 136, 236: Spreizmittel
- 38: Positionsnut
- 40a, 40b, 140a, 140b: Dehnungsschräge
- 42, 142, 242: Haltenut
- 44, 144, 244: Blockiermittel
- 46, 146, 246: Lagerelement
- 48, 148, 248: Schrägfläche
- 50: Stützarm
- 52: Stützkopf
- 54: Kopfaufnahme
- 56: Führungsstift
- 58: Führungskanal
- 59: Lagersockel
- 60, 160: Dichtungselement
- 62: Oberflächenstruktur
- 64: Angriffskontur
- 166, 266: Greifarme
- 168, 268: Rastarme
- 170, 270: Rastfortsätze
- 172: Ausnehmungen
- 174, 274: Druckverriegelungshöcker
- 276: Zapfen
- 278: Durchführungsöffnung
- 280: Rastzapfen
- U: Übersteckweg
- M: Montagerichtung

## Patentansprüche

1. Steckverbinder (1, 101, 201) zum Verbinden von einer ersten Fluidleitung mit einem Gegensteckverbinder (2), aufweisend einen Grundkörper (4, 104, 204) mit einem Durchgangskanal (6, 106, 206), wobei der Durchgangskanal (6, 106, 206) fluidisch mit einem als Muffenabschnitt (8, 108, 208) ausgebildeten Ende des Grundkörpers (4, 104, 204) verbunden ist, wobei in einem Aufnahmekanal (10, 110, 210) des Muffenabschnitts (8, 108, 208) ein Klammerkäfig (12, 112, 212) angeordnet ist, wobei der Klammerkäfig (12, 112, 212) in eine Montagerichtung (M) in den Aufnahmekanal (10, 110, 210) des Muffenabschnitts (8, 108, 208) einsteckbar und formschlüssig axial zur Montagerichtung (M) gehalten ist, wobei zwei parallel zueinander verlaufende Haltearme (18, 118, 218) einer senkrecht zur Montagerichtung (M) in den Klammerkäfig (12, 112, 212) einsteckbaren Halteklammer (20, 120, 220) in einem Ruhezustand der Haltearme (18, 118, 218) in eine Durchgangsöffnung (16, 116, 216) des Klammerkäfigs (12, 112, 212) hineinragen und radial zur Durchgangsöffnung (16, 116, 216) elastisch in einen Spannungszustand aufweitbar ausgebildet sind, wobei die Halteklammer (20, 120, 220) radial zur Durchgangsöffnung (16, 116, 216) von einer Einführstellung in eine Blockierstellung und von der Blockierstellung in die Einführstellung verschiebbar ausgebildet ist, wobei die Haltearme (18, 118, 218) in der Einführstellung der Halteklammer (20, 120, 220) in ihren Spannungszustand aufweitbar sind und die Haltearme (18, 118, 218) in der Blockierstellung der Halteklammer (20, 120, 220) gegen eine Aufweitung in den Spannungszustand blockiert sind,
**dadurch gekennzeichnet, dass**
die Halteklammer (20, 120, 220) zwei radial zur Durchgangsöffnung (16, 116, 216) elastische Lagerarme (22, 122, 222) aufweist und die Lagerarme (22, 122, 222) den Klammerkäfig (12, 112, 212) in dem Aufnahmekanal (10, 110, 210) axial zur Montagerichtung (M) formschlüssig fixieren und in einem Ruhezustand der Lagerarme (22, 122, 222) in die Durchgangsöffnung (16, 116, 216) hineinragen und radial zur Durchgangsöffnung (16, 116, 216) elastisch in einen Spannungszustand aufweitbar ausgebildet sind.

2. Steckverbinder (1, 101, 201) nach Anspruch 1,
**dadurch gekennzeichnet, dass**
während die Lagerarme (22, 122, 222) in dem Ruhezustand sind und die Halteklammer (20, 120, 220) in der Einführstellung ist, die Halteklammer (20, 120, 220) gegen die Verschiebung von der Einführstellung in die Blockierstellung blockiert ist.

3. Steckverbinder (1, 101, 201) nach einem der vorgehenden Ansprüche,
**dadurch gekennzeichnet, dass**
während die Haltearme (18, 118, 218) im Spannungszustand sind und die Halteklammer (20, 120, 220) in der Einführstellung ist, die Halteklammer (20, 120, 220) gegen die Verschiebung von der Einführstellung in die Blockierstellung blockiert ist.

4. Steckverbinder (1, 101, 201) nach einem der vorgehenden Ansprüche,
**dadurch gekennzeichnet, dass**
während die Lagerarme (22, 122, 222) in dem Ruhezustand sind und die Halteklammer (20, 120, 220) in der Blockierstellung ist, die Halteklammer (20, 120, 220) gegen die Verschiebung von der Blockierstellung in die Einführstellung kraftformschlüssig blockiert ist.

5. Steckverbinder (1, 101, 201) nach einem der vorgehenden Ansprüche,
**dadurch gekennzeichnet, dass**
die Halteklammer (20, 120, 220) U-förmig ausgebildet ist und die Lagerarme (22, 122, 222) und die Haltearme (18, 118, 218) über einen Verbindungsabschnitt (24, 124, 224) verbunden sind und sich gleichgerichtet von dem Verbindungsabschnitt (24, 124, 224) aus zu jeweils einem freien Ende erstrecken und die Lagerarme (22, 122, 222) und die Haltearme (18, 118, 218) axial voneinander beabstandet angeordnet sind.

6. Steckverbinder (1, 101, 201) nach einem der vorgehenden Ansprüche,
**dadurch gekennzeichnet, dass**
die Halteklammer (20, 120, 220) auf der gegen die Montagerichtung (M) weisende Seite zumindest zwei an den Haltearmen (18, 118, 218) und/oder an dem Verbindungsabschnitt (24, 124, 224) ausgebildete Druckverriegelungshöcker (174, 274) aufweist, welche derart gegen die Montagerichtung (M) weisend hervorstehend ausbildet sind, dass in der Blockierstellung der Halteklammer (20, 120, 220) die Druckverriegelungshöcker (174, 274) sich radial zur Durchgangsöffnung (16, 116, 216) an einer inneren Umfangswandung der Durchgangsöffnung (16, 116, 216) abstützen können,
insbesondere dass zwei Druckverriegelungshöcker (274) an den Haltearmen (18, 118, 218) derart gegenüberliegend zueinander ausgebildet und angeordnet sind, dass die Druckverriegelungshöcker (274) in der Blockierstellung der Halteklammer (20, 120, 220) und dem Ruhezustand der Haltearme (18, 118, 218) auf einer Symmetrieachse, insbesondere einer sich senkrecht zur Verschieberichtung der Halteklammer (20, 120, 220) erstreckenden Symmetrieachse, der Durchgangsöffnung (16, 116, 216) innerhalb der Durchgangsöffnung (16, 116, 216) angeordnet sind.

7. Steckverbinder (1, 101, 201) nach einem der vorgehenden Ansprüche,
**dadurch gekennzeichnet, dass**
der Klammerkäfig (12, 112, 212) zwei radial zur Durchgangsöffnung (16, 116, 216) geöffnete Fenster (26, 126, 226) aufweist und jeweils eine sich axial zur Durchgangsöffnung (16, 116, 216) erstreckende Verstärkungsstrebe (28, 128, 228) in den Fenstern (26, 126, 226) angeordnet ist, wobei die Haltearme (18, 118, 218) durch die Fenster (26, 126, 226) derart hindurchgreifen, dass die Haltearme (18, 118, 218) radial zwischen der Durchgangsöffnung (16, 116, 216) und den Verstärkungsstreben (28, 128, 228) angeordnet sind und in dem Ruhezustand in die Durchgangsöffnung (16, 116, 216) des Klammerkäfigs (12, 112, 212) hineinragen.

8. Steckverbinder (1, 101, 201) nach einem der vorgehenden Ansprüche,
**dadurch gekennzeichnet, dass**
der Muffenabschnitt (8, 108, 208) und der Klammerkäfig (12, 112, 212) jeweils zumindest zwei, zur Montagerichtung (M) radiale Durchbrüche (30, 130) aufweisen, wobei jeweils ein Durchbruch (30, 130) des Klammerkäfigs (12, 112, 212) und des Muffenabschnitts (8, 108, 208) in einem eingesteckten Zustand des Klammerkäfigs (12, 112, 212) im Muffenabschnitt (8, 108, 208) fluchtend zueinander angeordnet sind, so dass die Halteklammer (20, 120, 220) mit den Lagerarmen (22, 122, 222) radial zur Montagerichtung (M) durch die Durchbrüche (30, 130) des Klammerkäfigs (12, 112, 212) und des Muffenabschnitts (8, 108, 208) hindurch in die Durchgangsöffnung (16, 116, 216) des Klammerkäfigs (12, 112, 212) eingeführt werden kann, insbesondere dass die radial geöffneten Fenster (26, 126, 226) zur Anordnung und Durchführung der Haltearme (18, 118, 218) axial zur Montagerichtung (M) von den Durchbrüchen zur Anordnung und Durchführung der Lagerarme (22, 122, 222) beabstandet angeordnet sind und vorzugsweise dass die Fenster (26, 126, 226) und Durchbrüche (30, 130) axial zur Durchgangsöffnung (16, 116, 216) hintereinander angeordnet sind.

9. Steckverbinder (1, 101, 201) nach einem der vorgehenden Ansprüche,
**dadurch gekennzeichnet, dass**
der Klammerkäfig (12, 112, 212) radial nach außen weisende Rastmittel (32, 132) aufweist, und die Lagerarme (22, 122, 222) dazu korrespondierende Lagernuten (34, 134, 234) aufweisen, und die Rastmittel (32, 132) in dem Ruhezustand der Lagerarme (22, 122, 222) und der Einführstellung der Halteklammer (20, 120, 220) in die Lagernuten (34, 134, 234) eingreifen und im Ruhezustand der Lagerarme (22, 122, 222) eine Verschiebung der Halteklammer (20, 120, 220) von der Einführstellung in die Blockierstellung formschlüssig blockieren,
und/oder dass die Lagerarme (22, 122, 222) radial nach innen weisende Spreizmittel (36, 136, 236) aufweisen, und die Spreizmittel (36, 136, 236) in der Einführstellung der Halteklammer (20, 120, 220) und dem Ruhezustand der Lagerarme (22, 122, 222) derart in die Durchgangsöffnung (16, 116, 216) hineinragen, dass die Lagerarme (22, 122, 222) über die Spreizmittel (36, 136, 236) beim Einführen des Gegensteckverbinders (2) in Montagerichtung (M) von dem Ruhezustand in den Spannungszustand aufweitbar sind, so dass eine Verschiebung der Halteklammer (20, 120, 220) von der Einführstellung in die Blockierstellung freigegeben wird,
insbesondere dass die Lagernuten (34) in einer Erstreckungsrichtung der Lagerarme (22) hinter den Spreizmitteln (36) angeordnet sind, und zwischen der jeweiligen Lagernut (34) und dem jeweiligen Spreizmittel (36) eine Positionsnut (38) ausgebildet ist, und das Rastmittel (32) des Klammerkäfigs (12) in dem Ruhezustand der Lagerarme (22) und in der Blockierstellung der Halteklammer (20) derart in der Positionsnut (38) angeordnet ist, dass sich das Spreizmittel (36) auf einem Außenumfang des Gegensteckverbinders (2) kraftformschlüssig abstützt und einen Widerstand gegen eine Verschiebung der Halteklammer (20) von der Blockierstellung in die Einführstellung erzeugt.

10. Steckverbinder (1) nach Anspruch 9,
**dadurch gekennzeichnet, dass**
die Lagerarme (22) jeweils zumindest eine zum freien Ende der Lagerarme (22) ansteigende Dehnungsschräge (40a, 40b) aufweisen, wobei jeweils eine Dehnungsschräge (40a) oberhalb der Lagernut (34) mündet und sich die Lagernut (34) unmittelbar der Dehnungsschräge (40a) anschließt und/oder jeweils eine Dehnungsschräge (40b) oberhalb der Positionsnut (38) mündet und sich die Positionsnut (38) unmittelbar der Dehnungsschräge (40b) anschließt,
oder dass die Lagernuten (134) in einer Erstreckungsrichtung der Lagerarme (122, 222) vor den Spreizmitteln (136, 236) angeordnet sind und das Rastmittel (132) des Klammerkäfigs (112, 212) in dem Ruhezustand der Lagerarme (122, 222) und in der Einführstellung der Halteklammer (120, 220) derart in der Lagernut (134, 234) angeordnet ist, dass ein Widerstand gegen eine Verschiebung der Halteklammer (120, 220) von der Einführstellung in die Blockierstellung erzeugt ist,
insbesondere dass die Lagerarme (122, 222) jeweils zumindest eine zum freien Ende der Lagerarme (122, 222) ansteigende Dehnungsschräge (140a, 140b) aufweisen, wobei jeweils eine Dehnungsschräge (140a) oberhalb der Lagernut (134, 234) mündet und sich die Lagernut (134, 234) unmittelbar der Dehnungsschräge (140a) anschließt und/oder jeweils eine Dehnungsschräge (140b) an den Spreizmitteln (136, 236) ausgebildet ist, wobei in dem Ruhezustand der Lagerarme (122, 222) und der Blockierstellung der Halteklammer (120, 220) sich das Spreizmittel (136, 236) auf einem Außenumfang des Gegensteckverbinders (2) kraftformschlüssig abstützen kann und dadurch einen Widerstand gegen eine Verschiebung der Halteklammer (120, 220) von der Blockierstellung in die Einführstellung erzeugt,
und/oder insbesondere dass die Lagerarme (122, 222) derart ausgebildet sind, dass die Spreizmittel (136, 236) der Lagerarme (122, 222) zumindest in der Einführstellung der Halteklammer (120, 220) jeweils in Richtung zu den freien Enden der Lagerarme (122, 222) weisend hinter einer Mittelachse der Durchgangsöffnung (116, 216) angeordnet sind.

11. Steckverbinder (1, 101, 201) nach einem der vorgehenden Ansprüche,
**dadurch gekennzeichnet, dass**
die Haltearme (18, 118, 218) jeweils eine radial nach außen geöffnete Haltenut (42, 142, 242) ausgebildet haben, welche derart korrespondierend zu einem Blockiermittel (44, 144, 244) des Klammerkäfigs (12, 112, 212) ausgebildet ist, dass in dem Spannungszustand der Haltearme (18, 118, 218) und in der Einführstellung der Halteklammer (20, 120, 220) das Blockiermittel (44, 144, 244) in der Haltenut (42, 142, 242) derart angeordnet ist, dass eine Verschiebung der Halteklammer (20, 120, 220) von der Einführstellung in die Blockierstellung blockiert ist,
insbesondere, dass eine erste Nutwand der Haltenut (42, 142, 242) von einem radial vom Haltearm (18, 118, 218) nach außen abstehenden Lagerelement (46, 146, 246) zum freien Ende des Haltearms (18, 118, 218) weisend ausgebildet ist, wobei in dem Ruhezustand des Haltearms (18, 118, 218) und der Blockierstellung der Halteklammer (20, 120, 220) das Lagerelement (46, 146, 246) radial zu der Durchgangsöffnung (16, 116, 216) nach außen weisend an dem Blockiermittel (44, 144, 244) derart anliegt, dass eine radiale Dehnung der Haltearme (18, 118, 218) blockiert und eine Überführung der Haltearme (18, 118, 218) von dem Ruhezustand in den Spannungszustand blockiert ist,
und/oder insbesondere dass die Verstärkungsstreben (28, 128, 228) als Blockiermittel (44, 144, 244) dienen, so dass die als Blockiermittel (44, 144, 244) ausgebildeten Verstärkungsstreben (28, 128, 228) in dem Ruhezustand der Haltearme (18, 118, 218) und in der Einführstellung der Halteklammer (20, 120, 220) in den Haltenuten (42, 142, 242) angeordnet sind.

12. Steckverbinder (1, 101, 201) nach einem der vorgehenden Ansprüche,
**dadurch gekennzeichnet, dass**
die Halteklammer (20) zumindest einen, insbesondere zwei, Stützarme (50) aufweist, welcher zwischen den Lagerarmen (22) angeordnet sind und parallel zu den Lagerarmen (22) sich zu einem Stützkopf (52) erstreckend ausgebildet sind, wobei in der Blockierstellung der Halteklammer (20) der Stützkopf (52) in einer korrespondierend ausgebildeten Kopfaufnahme (54) im Außenumfang des Klammerkäfigs (12) angeordnet ist.

13. Steckverbinder (1, 101, 201) nach einem der vorgehenden Ansprüche,
**dadurch gekennzeichnet, dass**
die Halteklammer (20) zumindest einen Führungsstift (56) aufweist, welcher zwischen den Haltearmen (18) angeordnet ist und parallel zu den Haltearmen (18) sich zu einem Auflageende erstreckend ausgebildet ist, wobei in der Blockierstellung der Halteklammer (20) der Führungsstift (56) mit seinem Auflageende an einem Außenumfang des Klammerkäfigs (12) anliegt, insbesondere dass der Klammerkäfig (12) einen korrespondierend zum Führungsstift (56) ausgebildeten Führungskanal (58) aufweist, in welchen radial zur Durchgangsöffnung (16) der Führungsstift (56) in der Blockierstellung der Halteklammer (20) eingreift.

14. Steckverbinder (1, 101, 201) nach einem der Ansprüche 5 bis 13,
**dadurch gekennzeichnet, dass**
die Halteklammer (120, 220) zumindest einen, insbesondere zwei, sich gegenüberliegende, radialelastische Greifarme (166) aufweist, welche sich von einem an den Verbindungsabschnitt (124, 224) und/oder den Haltearmen (118, 218) angeformten Abschnitt aus in Richtung zu den freien Enden der Haltearme (118, 218) weisend erstrecken, wobei die Greifarme (166) jeweils mit einem Endabschnitt radial von den Haltearmen (118, 218) beabstandet sind, so dass die Greifarme (166) mit einer radial auf den Endabschnitt wirkenden Kraft zu den Haltearmen (118, 218) hin elastisch verformt werden können.

15. Steckverbinder (1, 101, 201) nach einem der vorgehenden Ansprüche,
**dadurch gekennzeichnet, dass**
der Klammerkäfig (112, 212) formschlüssig mittels zumindest einem radialelastischen Rastarm (168, 268) mit einem radial nach außen hervorstehenden Rastfortsatz (170, 270), welcher im eingesteckten Zustand in eine Ausnehmung (172) in einer Umfangswand des Muffenabschnitts (108, 208) formschlüssig rastend eingreift, gehalten ist, wobei der Rastarm (168, 268) am äußeren Umfang des Klammerkäfigs (112, 212) angeformt ist, insbesondere dass der Klammerkäfig (112) formschlüssig mittels zumindest zwei radialelastischer Rastarme (168) mit radial nach außen hervorstehenden Rastfortsätzen (170), die im eingesteckten Zustand in jeweils eine Ausnehmung (172) in der Umfangswand des Muffenabschnitts (108) formschlüssig rastend eingreifen, gehalten ist, wobei die Rastarme (168) am äußeren Umfang des Klammerkäfigs (112) angeformt sind.

16. Steckverbinder (201) nach einem der vorgehenden Ansprüche,
**dadurch gekennzeichnet, dass**
die Halteklammer (220) zwischen den Lagerarmen (220) zumindest ein radial zur Durchgangsöffnung (216) hervorstehenden Zapfen (276) aufweist, wobei der Muffenabschnitt (208) und der Klammerkäfig (212) jeweils zumindest eine, zur Montagerichtung (M) radiale Durchführungsöffnung (278) aufweisen, wobei jeweils eine Durchführungsöffnung (278) des Klammerkäfigs (212) und des Muffenabschnitts (208) in einem eingesteckten Zustand des Klammerkäfigs (212) im Muffenabschnitt (208) fluchtend zueinander angeordnet sind, so dass die Halteklammer (220) mit dem Zapfen (276) radial zur Montagerichtung (M) durch die Durchführungsöffnung (278) des Klammerkäfigs (212) und des Muffenabschnitts (208) hindurch eingeführt werden kann,
insbesondere dass radial zur Durchgangsöffnung (216) gegenüberliegend der Durchführungsöffnung (278) der Klammerkäfig (212) den radialelastischen Rastarm (268) mit dem radial nach außen hervorstehenden Rastfortsatz (270) am äußeren Umfang angeformt hat, welcher im eingesteckten Zustand in die Ausnehmung in der Umfangswand des Muffenabschnitts (208) formschlüssig rastend eingreift.

## Claims

1. Connector (1, 101, 201) for connecting a first fluid line to a mating connector (2), comprising a base element (4, 104, 204) with a through channel (6, 106, 206), wherein the through channel (6, 106, 206) is fluidically connected to an end of the base element (4, 104, 204) designed as a sleeve section (8, 108, 208), wherein a clamp cage (12, 112, 212) is arranged in a receptacle channel (10, 110, 210) of the sleeve section (8, 108, 208), wherein the clamp cage (12, 112, 212) can be inserted into the receptacle channel (10, 110, 210) of the sleeve section (8, 108, 208) in a mounting direction (M) and is held axially to the mounting direction (M) in a positive-locking manner, wherein two retaining arms (18, 118, 218) extending parallel to one another of a retaining clip (20, 120, 220) which can be inserted into the clamp cage (12, 112, 212) perpendicular to the mounting direction (M) project into a through opening (16, 116, 216) of the clamp cage (12, 112, 212) when the retaining arms (18, 118, 218) are in a rest state and are designed to be elastically expandable radially to the through opening (16, 116, 216) into a tension state, wherein the retaining clip (20, 120, 220) can be moved radially to the through opening (16, 116, 216) from an insertion position into a blocking position and from the blocking position into the insertion position, wherein the retaining arms (18, 118, 218) are expandable into their tension state in the insertion position of the retaining clip (20, 120, 220) and the retaining arms (18, 118, 218) are blocked against expansion into the tension state in the blocking position of the retaining clip (20, 120, 220),
**characterized in that**
the retaining clip (20, 120, 220) has two bearing arms (22, 122, 222) which are elastic radially to the through opening (16, 116, 216), and the bearing arms (22, 122, 222) fix the clamp cage (12, 112, 212) in the receptacle channel (10, 110, 210) axially to the mounting direction (M) in a positive-locking manner and in a rest state of the bearing arms (22, 122, 222) project into the through opening (16, 116, 216) and are designed to be elastically expandable radially to the through opening (16, 116, 216) into a tension state.

2. Connector (1, 101, 201) according to claim 1,
**characterized in that**
while the bearing arms (22, 122, 222) are in the rest state and the retaining clip (20, 120, 220) is in the insertion position, the retaining clip (20, 120, 220) is blocked against displacement from the insertion position to the blocking position.

3. Connector (1, 101, 201) according to any one of the preceding claims,
**characterized in that**
while the retaining arms (18, 118, 218) are in the tension state and the retaining clip (20, 120, 220) is in the insertion position, the retaining clip (20, 120, 220) is blocked against displacement from the insertion position to the blocking position.

4. Connector (1, 101, 201) according to any one of the preceding claims,
**characterized in that**
while the bearing arms (22, 122, 222) are in the rest state and the retaining clip (20, 120, 220) is in the blocking position, the retaining clip (20, 120, 220) is positively locked against displacement from the blocking position to the insertion position.

5. Connector (1, 101, 201) according to any one of the preceding claims,
**characterized in that**
the retaining bracket (20, 120, 220) is U-shaped and the bearing arms (22, 122, 222) and the retaining arms (18, 118, 218) are connected via a connecting section (24, 124, 224) and extend in the same direction from the connecting section (24, 124, 224) to a free end in each case and the bearing arms (22, 122, 222) and the retaining arms (18, 118, 218) are arranged axially spaced apart from one another.

6. Connector (1,101, 201) according to any one of the preceding claims,
**characterized in that**
the retaining clip (20, 120, 220) has at least two pressure locking humps (174, 274) formed on the retaining arms (18, 118, 218) and/or on the connecting section (24, 124, 224) on the side pointing against the mounting direction (M), which are formed projecting against the mounting direction (M) in such a way that, in the blocking position of the retaining clip (20, 120, 220), the pressure locking humps (174, 274) can be supported radially to the through opening (16, 116, 216) on an inner circumferential wall of the through opening (16, 116, 216), in particular that
two pressure-locking humps (274) on the retaining arms (18, 118, 218) are formed and arranged opposite each other in such a way that the pressure-locking humps (274) in the blocking position of the retaining clip (20, 120, 220) and the rest state of the retaining arms (18, 118, 218) are arranged on an axis of symmetry, in particular an axis of symmetry extending perpendicular to the direction of displacement of the retaining clip (20, 120, 220), of the through opening (16, 116, 216) within the through opening (16, 116, 216).

7. Connector (1, 101, 201) according to any one of the preceding claims,
**characterized in that**
the clamp cage (12, 112, 212) has two windows (26, 126, 226) open radially to the through opening (16, 116, 216) and a reinforcing strut (28, 128, 228) extending axially to the through opening (16, 116, 216) is arranged in each of the windows (26, 126, 226), wherein the retaining arms (18, 118, 218) extend through the windows (26, 126, 226) in such a way that the retaining arms (18, 118, 218) are arranged radially between the through opening (16, 116, 216) and the reinforcing struts (28, 128, 228) and, in the rest state, project into the through opening (16, 116, 216) of the clamp cage (12, 112, 212).

8. Connector (1, 101, 201) according to any one of the preceding claims,
**characterized in that**
the sleeve section (8, 108, 208) and the clamp cage (12, 112, 212) each have at least two breakthroughs (30, 130) radial to the mounting direction (M), each breakthrough (30, 130) of the clamp cage (12, 112, 212) and the sleeve section (8, 108, 208) being arranged in the sleeve section (8, 108, 208) are arranged in alignment with one another, so that the retaining clip (20, 120, 220) can be inserted with the bearing arms (22, 122, 222) radially to the mounting direction (M) through the breakthroughs (30, 130) of the clamp cage (12, 112, 212) and the sleeve section (8, 108, 208) into the through opening (16, 116, 216) of the clamp cage (12, 112, 212), in particular that the radially open windows (26, 126, 226) for arranging and passing through of the retaining arms (18, 118, 218) are arranged axially to the mounting direction (M) at a distance from the breakthroughs for arranging and passing through the bearing arms (22, 122, 222) and preferably that the windows (26, 126, 226) and breakthroughs (30, 130) are arranged axially one behind the other with respect to the through opening (16, 116, 216).

9. Connector (1, 101, 201) according to any one of the preceding claims,
**characterized in that**
the clamp cage (12, 112, 212) has radially outwardly pointing detents (32, 132), and the bearing arms (22, 122, 222) have bearing grooves (34, 134, 234) corresponding thereto, and the detents (32, 132) engage in the bearing grooves (34, 134, 234) in the rest state of the bearing arms (22, 122, 222) and the insertion position of the retaining clip (20, 120, 220), and in the rest state of the bearing arms (22, 122, 222) block a displacement of the retaining clip (20, 120, 220) from the insertion position into the blocking position in a positive-locking manner, and/or that the bearing arms (22, 122, 222) have radially inwardly pointing expanding means (36, 136, 236), and the expanding means (36, 136, 236) project into the through opening (16, 116, 216) in the insertion position of the retaining clip (20, 120, 220) and the rest state of the bearing arms (22, 122, 222) in such a way that the bearing arms (22, 122, 222) can be expanded via the expanding means (36, 136, 236) from the rest state into the tension state when the mating connector (2) is inserted in the mounting direction (M), so that a displacement of the retaining clip (20, 120, 220) from the insertion position into the blocking position is enabled, in particular that the bearing grooves (34) are arranged behind the expansion means (36) in a direction of extension of the bearing arms (22), and a position groove (38) is formed between the respective bearing groove (34) and the respective expansion means (36), and the detent (32) of the clamp cage (12) is arranged in the position groove (38) in the rest state of the bearing arms (22) and in the blocking position of the retaining clip (20) in such a way that the expanding means (36) is supported in a force-locking manner on an outer circumference of the mating connector (2) and generates a resistance to a displacement of the retaining clip (20) from the blocking position into the insertion position.

10. Connector (1) according to claim 9,
**characterized in that**
the bearing arms (22) each have at least one expansion slope (40a, 40b) rising towards the free end of the bearing arms (22), wherein in each case one expansion slope (40a) opens above the bearing groove (34) and the bearing groove (34) directly adjoins the expansion slope (40a) and/or in each case one expansion slope (40b) opens above the positioning groove (38) and the positioning groove (38) directly adjoins the expansion slope (40b), or that the bearing grooves (134) are arranged in front of the expanding means (136, 236) in a direction of extension of the bearing arms (122, 222) and the detent (132) of the clamp cage (112, 212) is arranged in the bearing groove (134, 234) in the rest state of the bearing arms (122, 222) and in the insertion position of the retaining clip (120, 220) in such a way that a resistance to a displacement of the retaining clip (120, 220) from the insertion position into the blocking position is generated, in particular that
the bearing arms (122, 222) each have at least one expansion slope (140a, 140b) rising towards the free end of the bearing arms (122, 222), wherein in each case one expansion slope (140a) opens above the bearing groove (134, 234) and the bearing groove (134, 234) directly adjoins the expansion slope (140a) and/or in each case one expansion slope (140b) is formed on the expansion means (136, 236), wherein in the rest state of the bearing arms (122, 222) and the blocking position of the retaining clip (120, 220), the expanding means (136, 236) can be supported in a force-locking manner on an outer circumference of the mating connector (2) and thereby generates a resistance to a displacement of the retaining clip (120, 220) from the blocking position into the insertion position, and/or in particular that the bearing arms (122, 222) are designed such that the expanding means (136, 236) of the bearing arms (122, 222) are arranged behind a center axis of the through opening (116, 216), at least in the insertion position of the retaining clip (120, 220), in each case pointing towards the free ends of the bearing arms (122, 222).

11. Connector (1, 101, 201) according to any one of the preceding claims,
**characterized in that**
the retaining arms (18, 118, 218) each have formed a retaining groove (42, 142, 242) which is open radially outwards and which is designed to correspond to a blocking means (44, 144, 244) of the clamp cage (12, 112, 212) in such a way that in the tension state of the retaining arms (18, 118, 218) and in the insertion position of the retaining clip (20, 120, 220) the blocking means (44, 144, 244) is arranged in the retaining groove (42, 142, 242) in such a way that a displacement of the retaining clip (20, 120, 220) from the insertion position into the blocking position is blocked, in particular that a first groove wall of the retaining groove (42, 142, 242) is formed by a bearing element (46, 146, 246) projecting radially outwards from the retaining arm (18, 118, 218) and pointing towards the free end of the retaining arm (18, 118, 218), wherein in the rest state of the retaining arm (18, 118, 218) and the blocking position of the retaining clip (20, 120, 220), the bearing element (46, 146, 246) bears against the blocking means (44, 144, 244), pointing radially outwards towards the through opening (16, 116, 216), in such a way that radial expansion of the retaining arms (18, 118, 218) is blocked and transfer of the retaining arms (18, 118, 218) from the rest state to the tension state is blocked, and/or in particular that
the reinforcing struts (28, 128, 228) serve as blocking means (44, 144, 244), so that the reinforcing struts (28, 128, 228) designed as blocking means (44, 144, 244) are arranged in the retaining grooves (42, 142, 242) in the rest state of the retaining arms (18, 118, 218) and in the insertion position of the retaining clip (20, 120, 220).

12. Connector (1, 101, 201) according to any one of the preceding claims,
**characterized in that**
the retaining clip (20) has at least one, in particular two, support arms (50), which are arranged between the bearing arms (22) and are designed to extend parallel to the bearing arms (22) to form a support head (52), wherein in the blocking position of the retaining clip (20) the support head (52) is arranged in a correspondingly designed head receptacle (54) in the outer circumference of the clamp cage (12).

13. Connector (1, 101, 201) according to any one of the preceding claims,
**characterized in that**
the retaining clip (20) has at least one guide pin (56), which is arranged between the retaining arms (18) and is designed to extend parallel to the retaining arms (18) to a support end, wherein in the blocking position of the retaining clip (20) the guide pin (56) bears with its support end against an outer circumference of the clamp cage (12), in particular that the clamp cage (12) has a guide channel (58) which corresponds to the guide pin (56) and in which the guide pin (56) engages radially to the through opening (16) in the blocking position of the retaining clip(20).

14. Connector(1, 101, 201) according to any one of claims 5 to 13,
**characterized in that**
the retaining clip (120, 220) has at least one, in particular two, radially elastic gripping arms (166) which lie opposite one another and which extend from a section formed on the connecting section (124, 224) and/or the retaining arms (118, 218) in the direction of the free ends of the retaining arms (118, 218), wherein the gripping arms (166) each having an end section radially spaced from the retaining arms (118, 218), so that the gripping arms (166) can be elastically deformed towards the retaining arms (118, 218) by a force acting radially on the end section.

15. Connector (1,101, 201) according to any one of the preceding claims,
**characterized in that**
the clamp cage (112, 212) is held in a positive-locking manner by means of at least one radially elastic latching arm (168, 268) with a radially outwardly projecting latching extension (170, 270), which in the inserted state engages in a positive-locking manner in a recess (172) in a circumferential wall of the sleeve section (108, 208), wherein the latching arm (168, 268) being integrally formed on the outer circumference of the clamp cage (112, 212), in particular that
the clamp cage (112) is held in a positive-locking manner by means of at least two radially elastic latching arms (168) with radially outwardly projecting latching projections (170), which in the inserted state engage in a positive-locking manner in a recess (172) in the circumferential wall of the sleeve section (108), wherein the latching arms (168) being integrally formed on the outer circumference of the clamp cage (112).

16. Connector (201) according to any one of the preceding claims,
**characterized in that**
the retaining clip (220) has between the bearing arms (220) at least one pin (276) projecting radially towards the through opening (216), the sleeve section (208) and the clamp cage (212) each having at least one through opening (278) radial to the mounting direction (M), wherein a respective through opening (278) of the clamp cage (212) and of the sleeve section (208) are arranged in alignment with one another in an inserted state of the clamp cage (212) in the sleeve section (208), so that the retaining clip (220) can be inserted with the pin (276) radially to the mounting direction (M) through the through opening (278) of the clamp cage (212) and of the sleeve section (208), in particular that
the clamp cage (212) has the radially elastic latching arm (268) with the radially outwardly projecting latching extension (270) formed on the outer circumference radially opposite the through opening (216) of the feedthrough opening (278), which in the inserted state engages in a positive-locking manner in the recess in the circumferential wall of the sleeve section (208).

## Revendications

1. Connecteur enfichable (1, 101, 201) destiné à relier une première conduite de fluide à un connecteur enfichable complémentaire (2), comprenant un corps de base (4, 104, 204) avec un canal de passage (6, 106, 206), le canal de passage (6, 106, 206) étant relié de manière fluidique à une extrémité du corps de base (4, 104, 204) formée en tant que partie manchon (8, 108, 208), une cage de pince (12, 112, 212) étant disposée dans un canal de réception (10, 110, 210) de la partie manchon (8, 108, 208), la cage de pince (12, 112, 212) pouvant être insérée dans le sens de montage (M) dans le canal de réception (10, 110, 210) de la partie manchon (8, 108, 208) et maintenue par obstacle de forme axialement par rapport au sens de montage (M), deux bras de retenue (18, 118, 218) d'une pince de retenue (20, 120, 220) pouvant être insérée perpendiculairement à la direction de montage (M) dans la cage de pince (12, 112, 212) s'étendent dans une ouverture de passage (16, 116, 216) de la cage de pince (12, 112, 212) et sont conçus de manière à pouvoir s'écarter élastiquement dans un état de tension radialement par rapport à l'ouverture de passage (16, 116, 216), la pince de retenue (20, 120, 220) sont conçues de manière à pouvoir être déplacées radialement par rapport à l'ouverture de passage (16, 116, 216) d'une position d'introduction à une position de blocage et de la position de blocage à la position d'introduction, les bras de retenue (18, 118, 218) pouvant être élargis dans leur état de tension dans la position d'introduction de la pince de retenue (20, 120, 220) et les bras de retenue (18, 118, 218) sont bloqués dans la position de blocage de la pince de retenue (20, 120, 220) contre un écartement dans l'état tendu,
**caractérisé en ce que**
la pince de retenue (20, 120, 220) comporte deux bras d'appui (22, 122, 222) élastiques radialement par rapport à l'ouverture de passage (16, 116, 216) et les bras d'appui (22, 122, 222) fixent la cage de pince (12, 112, 212) par obstacle dans le canal de réception (10, 110, 210) de manière axiale par rapport à la direction de montage (M) et, dans un état de repos des bras d'appui (22, 122, 222), s'engagent dans l'ouverture de passage (16, 116, 216) et sont conçus de manière à pouvoir s'élargir élastiquement dans un état de tension radialement par rapport à l'ouverture de passage (16, 116, 216).

2. Connecteur enfichable (1, 101, 201) selon la revendication 1,
**caractérisé en ce que**
lorsque les bras d'appui (22, 122, 222) sont à l'état de repos et que la pince de retenue (20, 120, 220) est en position d'insertion, la pince de retenue (20, 120, 220) est bloquée contre tout déplacement de la position d'insertion vers la position de blocage.

3. Connecteur enfichable (1, 101, 201) selon l'une des revendications précédentes,
**caractérisé en ce que**
lorsque les bras de retenue (18, 118, 218) sont en état de tension et que la pince de retenue (20, 120, 220) est en position d'insertion, la pince de retenue (20, 120, 220) est bloquée contre tout déplacement de la position d'insertion vers la position de blocage.

4. Connecteur enfichable (1, 101, 201) selon l'une des revendications précédentes,
**caractérisé en ce que**
lorsque les bras d'appui (22, 122, 222) sont à l'état de repos et que la pince de retenue (20, 120, 220) est en position de blocage, la pince de retenue (20, 120, 220) est bloquée par adhérence et obstacle contre tout déplacement de la position de blocage vers la position d'insertion.

5. Connecteur enfichable (1, 101, 201) selon l'une des revendications précédentes,
**caractérisé en ce que**
la pince de retenue (20, 120, 220) est réalisée en forme de U et les bras d'appui (22, 122, 222) et les bras de retenue (18, 118, 218) sont reliés par une partie de liaison (24, 124, 224) et s'étendent dans la même direction à partir de la partie de liaison (24, 124, 224) vers une extrémité libre respective, et les bras d'appui (22, 122, 222) et les bras de retenue (18, 118, 218) sont disposés à distance axiale les uns des autres.

6. Connecteur enfichable (1, 101, 201) selon l'une des revendications précédentes,
**caractérisé en ce que**
la pince de retenue (20, 120, 220) comporte, sur le côté opposé au sens de montage (M), au moins deux ergots de verrouillage par pression (174, 274) formés sur les bras de retenue (18, 118, 218) et/ou sur la partie de liaison (24, 124, 224), qui sont formées de manière à faire saillie dans le sens opposé au sens de montage (M), de telle sorte que, dans la position de blocage de la pince de retenue (20, 120, 220), les ergots de verrouillage par pression (174, 274) puissent s'appuyer radialement par rapport à l'ouverture de passage (16, 116, 216) sur une paroi périphérique intérieure de l'ouverture de passage (16, 116, 216),
en particulier que deux ergots de verrouillage par pression (274) sont formés et disposés sur les bras de retenue (18, 118, 218) de manière à être opposés l'un à l'autre, de telle sorte que les ergots de verrouillage par pression (274), lorsque la pince de retenue (20, 120, 220) et à l'état de repos des bras de retenue (18, 118, 218) sur un axe de symétrie, en particulier un axe s'étendant perpendiculairement à la direction de déplacement de la pince de retenue (20, 120, 220), de l'ouverture de passage (16, 116, 216) à l'intérieur de l'ouverture de passage (16, 116, 216).

7. Connecteur enfichable (1, 101, 201) selon l'une des revendications précédentes,
**caractérisé en ce que**
la cage de pince (12, 112, 212) comporte deux fenêtres (26, 126, 226) ouvertes radialement par rapport à l'ouverture de passage (16, 116, 216) et une entretoise de renfort (28, 128, 228) s'étendant axialement par rapport à l'ouverture de passage (16, 116, 216) dans les fenêtres (26, 126, 226), les bras de retenue (18, 118, 218) passant à travers les fenêtres (26, 126, 226) de telle sorte que les bras de retenue (18, 118, 218) sont disposés radialement entre l'ouverture de passage (16, 116, 216) et les entretoises de renfort (28, 128, 228) et, à l'état de repos, font saillie dans l'ouverture de passage (16, 116, 216) de la cage de pince (12, 112, 212).

8. Connecteur enfichable (1, 101, 201) selon l'une des revendications précédentes,
**caractérisé en ce que**
la partie manchon (8, 108, 208) et la cage de pince (12, 112, 212) présentent chacune au moins deux ouvertures radiales (30, 130) par rapport à la direction de montage (M), une ouverture (30, 130) de la cage de pince (12, 112, 212) et de la partie manchon (8, 108, 208) sont alignées l'une par rapport à l'autre lorsque la cage de pince (12, 112, 212) est insérée dans la partie manchon (8, 108, 208) de manière alignée l'une par rapport à l'autre, de sorte que la pince de retenue (20, 120, 220) avec les bras d'appui (22, 122, 222) s'étend radialement par rapport à la direction de montage (M) à travers les ouvertures (30, 130) de la cage de pince (12, 112, 212) et de la partie manchon (8, 108, 208) dans l'ouverture de passage (16, 116, 216) de la cage de pince (12, 112, 212),
en particulier que les fenêtres (26, 126, 226) ouvertes radialement pour la disposition et le passage des bras de retenue (18, 118, 218) sont espacées axialement par rapport au sens de montage (M) des percées pour la disposition et le passage des bras d'appui (22, 122, 222) et de préférence que les fenêtres (26, 126, 226) et les ouverture (30, 130) sont disposées axialement les unes derrière les autres par rapport à l'ouverture de passage (16, 116, 216).

9. Connecteur enfichable (1, 101, 201) selon l'une des revendications précédentes,
**caractérisé en ce que**
la cage de pince (12, 112, 212) comporte des moyens d'encliquetage (32, 132) orientés radialement vers l'extérieur, et les bras d'appui (22, 122, 222) présentent des rainures de palier (34, 134, 234) correspondantes, et les moyens d'encliquetage (32, 132) s'engagent dans l'état de repos des bras d'appui (22, 122, 222) et dans la position d'insertion de la pince de retenue (20, 120, 220) s'engagent dans les rainures de palier (34, 134, 234) et, à l'état de repos des bras d'appui (22, 122, 222), bloquent par obstacle de forme un déplacement de la pince de retenue (20, 120, 220) de la position d'introduction à la position de blocage,
et/ou que les bras d'appui (22, 122, 222) comportent des moyens d'écartement (36, 136, 236) orientés radialement vers l'intérieur, et que les moyens d'écartement (36, 136, 236) dans la position d'introduction de la pince de retenue (20, 120, 220) et à l'état de repos des bras d'appui (22, 122, 222) de telle sorte qu'ils s'engagent dans l'ouverture de passage (16, 116, 216) de telle sorte que les bras d'appui (22, 122, 222) peuvent être écartés par les moyens d'écartement (36, 136, 236) lors de l'introduction du connecteur enfichable complémentaire (2) dans le sens du montage (M), de l'état de repos à l'état de tension, de sorte qu'un déplacement de la pince de retenue (20, 120, 220) de la position d'introduction à la position de blocage est libéré, en particulier que les rainures de palier (34) sont disposées dans une direction d'extension des bras d'appui (22) derrière les moyens d'écartement (36) et qu'une rainure de positionnement (38) est formée entre la rainure de palier respective (34) et le moyen d'écartement (36) respectif, et le moyen d'encliquetage (32) de la cage de pince (12) est disposé dans la rainure de positionnement (38) dans l'état de repos des bras d'appui (22) et dans la position de blocage de la pince de retenue (20) de telle sorte que le moyen d'écartement (36) s'appuie par adhérence et obstacle sur une circonférence extérieure du connecteur enfichable complémentaire (2) et génère une résistance au déplacement de la pince de retenue (20) de la position de blocage à la position d'insertion.

10. Connecteur enfichable (1) selon la revendication 9,
**caractérisé en ce que**
les bras d'appui (22) présentent chacun au moins une rampe d'expansion (40a, 40b) montant vers l'extrémité libre des bras d'appui (22), une rampe d'expansion (40a) débouche au-dessus de la rainure de palier (34) et la rainure de palier (34) se raccorde directement à la rampe d'expansion (40a) et/ou une rampe d'expansion (40b) débouche au-dessus de la rainure de positionnement (38) et la rainure de positionnement (38) se raccorde directement à la rampe d'expansion (40b),
ou que les rainures de palier (134) sont disposées dans une direction d'extension des bras d'appui (122, 222) devant les moyens d'écartement (136, 236) et que le moyen d'encliquetage (132) de la cage de pince (112, 212) est disposé dans la rainure de palier (134, 234) dans l'état de repos des bras d'appui (122, 222) et dans la position d'introduction de la pince de retenue (120, 220) de telle sorte qu'une résistance au déplacement de la pince de retenue (120, 220) de la position d'introduction à la position de blocage est générée,
en particulier que les bras d'appui (122, 222) présentent chacun au moins une rampe d'expansion (140a, 140b) s'élevant vers l'extrémité libre des bras d'appui (122, 222), une rampe d'expansion (140a) débouchant au-dessus de la rainure de support (134, 234) et la rainure de support (134, 234) se raccordant directement à la rampe d'expansion (140a) et/ou une rampe d'expansion (140b) étant formée sur les moyens d'écartement (136, 236), dans lequel, à l'état de repos des bras d'appui (122, 222) et en position de blocage de la pince de retenue (120, 220), le moyen d'écartement (136, 236) peut s'appuyer par adhérence et obstacle sur une circonférence extérieure du connecteur enfichable complémentaire (2) et génère ainsi une résistance au déplacement de la pince de retenue (120, 220) de la position de blocage à la position d'insertion,
et/ou en particulier que les bras d'appui (122, 222) sont conçus de telle sorte que les moyens d'écartement (136, 236) des bras d'appui (122, 222) soient disposés, au moins dans la position d'introduction de la pince de retenue (120, 220), chacun en direction des extrémités libres des bras d'appui (122, 222) derrière un axe central de l'ouverture de passage (116, 216).

11. Connecteur enfichable (1, 101, 201) selon l'une des revendications précédentes,
**caractérisé en ce que**
les bras de retenue (18, 118, 218) présentent chacun une rainure de retenue (42, 142, 242) ouverte radialement vers l'extérieur, qui est conçue de manière à correspondre à un moyen de blocage (44, 144, 244) de la cage de pince (12, 112, 212) de telle sorte que, dans l'état de tension des bras de retenue (18, 118, 218) et dans la position d'introduction de la pince de retenue (20, 120, 220), le moyen de blocage (44, 144, 244) est disposé dans la rainure de retenue (42, 142, 242) de telle sorte qu'un déplacement de la pince de retenue (20, 120, 220) de la position d'introduction à la position de blocage est bloqué,
en particulier qu'une première paroi de la rainure de retenue (42, 142, 242) est formée par un élément de palier (46, 146, 246) s'étendant radialement vers l'extérieur à partir du bras de retenue (18, 118, 218) vers l'extrémité libre du bras de retenue (18, 118, 218), l'élément de palier (46, 146, 246) s'appuyant, à l'état de repos du bras de retenue (18, 118, 218) et en position de blocage de la pince de retenue (20, 120, 220), radialement par rapport à l'ouverture de passage (16, 116, 216) de manière à bloquer un allongement radial des bras de retenue (18, 118, 218) et à empêcher le passage des bras de retenue (18, 118, 218) de l'état de repos à l'état de tension,
et/ou en particulier que les entretoises de renfort (28, 128, 228) servent de moyen de blocage (44, 144, 244), de sorte que les entretoises de renfort (28, 128, 228) conçus comme des moyens de blocage (44, 144, 244) sont disposés dans l'état de repos des bras de retenue (18, 118, 218) et dans la position d'introduction de la pince de retenue (20, 120, 220) dans les rainures de retenue (42, 142, 242).

12. Connecteur enfichable (1, 101, 201) selon l'une des revendications précédentes,
**caractérisé en ce que**
la pince de retenue (20) comporte au moins un, en particulier deux bras de support (50) qui sont disposés entre les bras d'appui (22) et sont réalisés de manière à s'étendre parallèlement aux bras d'appui (22) jusqu'à une tête de support (52), la tête de support (52) est disposée dans un logement de tête (54) de forme correspondante dans le pourtour extérieur de la cage de pince (12).

13. Connecteur enfichable (1, 101, 201) selon l'une des revendications précédentes,
**caractérisé en ce que**
la pince de retenue (20) comporte au moins une broche de guidage (56) qui est disposée entre les bras de retenue (18) et qui s'étend parallèlement aux bras de retenue (18) pour former une extrémité d'appui, la broche de guidage (56) s'appuyant, dans la position de blocage de la pince de retenue (20), la broche de guidage (56) repose avec son extrémité d'appui sur une circonférence extérieure de la cage de pince (12),
en particulier que la cage de pince (12) présente un canal de guidage (58) formé de manière correspondante à la broche de guidage (56), dans lequel la broche de guidage (56) s'engage radialement par rapport à l'ouverture de passage (16) dans la position de blocage de la pince de retenue (20).

14. Connecteur enfichable (1, 101, 201) selon l'une des revendications 5 à 13,
**caractérisé en ce que**
la pince de retenue (120, 220) comporte au moins un, en particulier deux bras de préhension (166) élastiques radialement et opposés, qui s'étendent à partir d'une partie formée sur la partie de liaison (124, 224) et/ou des bras de retenue (118, 218) en direction des extrémités libres des bras de retenue (118, 218), les bras de préhension (166) étant chacun espacés radialement des bras de retenue (118, 218) au niveau d'une partie d'extrémité, de sorte que les bras de préhension (166) peuvent être déformés élastiquement vers les bras de retenue (118, 218) avec une force agissant radialement sur la partie d'extrémité.

15. Connecteur (1, 101, 201) selon l'une des revendications précédentes,
**caractérisé en ce que**
la cage de pince (112, 212) est maintenue par obstacle de forme au moyen d'au moins un bras d'encliquetage (168, 268) radialement élastique avec un prolongement d'encliquetage (170, 270) faisant saillie radialement vers l'extérieur, qui, à l'état enfiché, s'engage par obstacle de forme dans un évidement (172) dans une paroi périphérique de la partie manchon (108, 208), le bras d'encliquetage (168, 268) étant formé sur le pourtour extérieur de la cage de pince (112, 212),
en particulier que la cage de pince (112) est maintenue par obstacle de forme au moyen d'au moins deux bras d'encliquetage (168) élastiques radialement avec des prolongements d'encliquetage (170) saillant radialement vers l'extérieur, qui, à l'état enfiché, s'engagent par obstacle de forme respectivement dans un évidement (172) dans la paroi périphérique de la partie de manchon (108), les bras d'encliquetage (168) étant formés sur le pourtour extérieur de la cage de pince (112).

16. Connecteur enfichable (201) selon l'une des revendications précédentes,
**caractérisé en ce que**
la pince de retenue (220) entre les bras d'appui (220) comporte au moins un tenon (276) faisant saillie radialement par rapport à l'ouverture de passage (216), la partie manchon (208) et la cage de pince (212) comportent chacune au moins une ouverture de passage (278) radiale par rapport à la direction de montage (M), une ouverture de passage (278) de la cage de pince (212) et une ouverture de passage (278) de la partie manchon (208) sont alignées l'une par rapport à l'autre lorsque la cage de pince (212) est insérée dans la partie manchon (208) de manière alignée l'une par rapport à l'autre, de sorte que la pince de retenue (220) avec le tenon (276) peut être introduite radialement par rapport à la direction de montage (M) à travers l'ouverture de passage (278) de la cage de pince (212) et de la partie manchon (208), en particulier que, radialement par rapport à l'ouverture de passage (216) opposée à l'ouverture de passage (278), la cage de pince (212) comporte le bras d'encliquetage (268) radialement élastique avec le prolongement d'encliquetage (270) saillant radialement vers l'extérieur sur la périphérie extérieure, qui, à l'état enfiché, s'engage par obstacle de forme dans l'évidement de la paroi périphérique de la partie manchon (208).
